# EUROPEAN PATENT APPLICATION

(11) **EP 3 623 428 A1**
(43) Date of publication of application: **18.03.2020**
(21) Application number: 18194950.4
(22) Date of filing: 17.09.2018
(51) Int. Cl.: C09C 1/02, C08K 3/26, C08K 9/08, C09C 3/08

(54) **COMPACTED POLYMER-BASED FILLER MATERIAL FOR PLASTIC ROTOMOULDING**

(71) Applicant: Omya International AG, 4665 Oftringen (CH)
(72) Inventor: BARADEL, Franck, 4800 Zofingen (CH); MURATORE, Antonio, 54100 Massa (IT)
(74) Representative: Glas, Holger

(57) **Abstract**

The present invention relates to a compacted polymer-based filler material having a top cut particle size *d*₉₈ of ≤ 500 µm, a process for producing said compacted polymer-based filler material, a rotomoulded product obtained from the compacted polymer-based filler material, a process for producing said rotomoulded product as well as the use of said compacted polymer-based filler material as additive in a rotomoulded product

## Description

The present invention relates to a compacted polymer-based filler material having a top cut particle size *d*₉₈ of ≤ 500 µm, a process for producing said compacted polymer-based filler material, a rotomoulded product obtained from the compacted polymer-based filler material, a process for producing said rotomoulded product as well as the use of said compacted polymer-based filler material as additive in a rotomoulded product

Rotomoulding involves the preparation of hollow articles by the addition of a polymer-based material into a heated hollow mould which is then slowly rotated (usually around two perpendicular axes), causing the softened polymer-based material to disperse and stick to the walls of the mould. The mould is rotated at all times during the heating for maintaining even thicknesses throughout the article and also during the cooling of the article for avoiding sagging or deformation.

In polymer applications, the polymer material is typically mixed with a filler powder material in order to improve the stiffness of the final article. However, such filler powder materials are usually not well dispersed in the polymer material resulting in a loss of impact strength. Thus, an intermediate product like a masterbatch or concentrate is typically used in order to obtain a final article in which the filler powder material is well dispersed.

Such concentrates are for example known from WO 2016/087286 A1 disclosing a process for producing a compacted material comprising the steps of providing a powder material and a polymer binder, simultaneously or subsequently feeding the powder material and the polymer binder into a high speed mixer unit, mixing the powder material and the polymer binder in the high speed mixer unit until formation of a compacted material, and reducing the temperature of the obtained compacted material below the melting point or glass transition temperature of the polymer binder.

However, the usual concentrates typically do not show sufficient results for final articles prepared in rotomoulding. In particular, it is still desired to increase the stiffness and impact properties of the final article which may eventually result in a reduction of the article thickness. Furthermore, it is desired that the filler material can be directly added to the polymer material. In addition thereto, it is desired to reduce the cycle time by reducing the cooling time. Finally, it is desired to achieve a white coloration without the use of expensive white mineral colorants.

Accordingly, it is a first object of the present invention to provide a material suitable for direct incorporation into polymers used in rotomoulding. Another object of the present invention is to provide a material allowing to increase the stiffness and impact properties of a final article and which may eventually result in a reduction of the article thickness. A further object of the present invention is to provide a material allowing to reduce the cycle time by reducing the cooling time and to achieve a white coloration without the use of expensive white mineral colorants. It would also be desirable to provide a process for producing rotomoulded articles having high stiffness and impact properties and reduced thickness and additionally provides white coloration without the use of expensive white mineral colorants.

The foregoing objects and other objects are solved by the subject-matter as defined herein in the independent claims. Advantageous embodiments of the present invention are defined herein and also in the corresponding sub-claims.

According to one aspect of the present invention, a compacted polymer-based filler material having a top cut particle size *d*₉₈ of ≤ 500 µm is provided, the material comprising
a) from 40 to 98 wt.-%, based on the total weight of the compacted polymer-based-mineral filler, of a surface-treated filler material product comprising an alkaline earth metal carbonate-comprising filler material and a treatment layer on at least a part of the surface of the alkaline earth metal carbonate-comprising filler material,
   wherein the treatment layer comprises
   i) at least one mono-substituted succinic anhydride and/or at least one mono-substituted succinic acid and/or reaction products thereof, and/or
   ii) a phosphoric acid ester blend of one or more phosphoric acid mono-ester and reaction products thereof and/or one or more phosphoric acid di-ester and reaction products thereof, and/or
   iii) an aliphatic carboxylic acid having a total amount of carbon atoms from C₄ to C₂₄ and/or reaction products thereof, and/or
   iv) a polyhydrogensiloxane or an inert silicone oil and/or reaction products thereof, and/or
   v) an aliphatic aldehyde and/or reaction products thereof,
b) from 1.95 to 59.95 wt.-%, based on the total weight of the compacted polymer-based-mineral filler, of a polymer binder, and
c) from 0.05 to 5 wt.-%, based on the total weight of the compacted polymer-based-mineral filler, of additive(s) including one or more stabilizers.

According to one embodiment, the alkaline earth metal carbonate-comprising filler material is a calcium carbonate-comprising filler material, preferably is a natural ground calcium carbonate, precipitated calcium carbonate, surface-modified calcium carbonate, or a mixture thereof, and most preferably is a natural ground calcium carbonate.

According to another embodiment, the alkaline earth metal carbonate-comprising filler material has a weight median particle size *d*₅₀ from 0.05 to 30 µm, preferably from 0.5 to 10 µm, and most preferably from 0.5 to 8 µm.

According to yet another embodiment, the at least one mono-substituted succinic anhydride consists of succinic anhydride mono-substituted with a group selected from a linear, branched, aliphatic and cyclic group having a total amount of carbon atoms from C2 to C30, preferably from C3 to C25, and most preferably from C4 to C20 in the substituent.

According to one embodiment, I) the one or more phosphoric acid mono-ester consists of an o-phosphoric acid molecule mono-esterified with one alcohol molecule selected from unsaturated or saturated, branched or linear, aliphatic or aromatic alcohols having a total amount of carbon atoms from C6 to C30, preferably from C8 to C22, more preferably from C8 to C20, and most preferably from C8 to C18 in the alcohol substituent, and/or II) the one or more phosphoric acid di-ester consists of an o-phosphoric acid molecule di-esterified with two alcohol molecules selected from the same or different, unsaturated or saturated, branched or linear, aliphatic or aromatic fatty alcohols having a total amount of carbon atoms from C6 to C30, preferably from C8 to C22, more preferably from C8 to C20, and most preferably from C8 to C18 in the alcohol substituent.

According to another embodiment, the surface-treated filler material product comprises the treatment layer in an amount of at least 0.1 wt.-%, based on the total dry weight of the alkaline earth metal carbonate-comprising filler material, preferably in an amount from 0.1 to 3 wt.-%.

According to yet another embodiment, the polymer binder a) has a rotational viscosity from 100 to 400 000 mPa·s, preferably from 1 000 to 100 000 mPa·s, and more preferably from 5 000 to 50 000 mPa·s, at 210°C, and/or b) is selected from the group consisting of homopolymers and/or copolymers of polyolefins, polyamides, polystyrenes, poly(meth)acrylates, polyvinylchlorides, polyurethanes, halogen-containing polymers, polyesters, polycarbonates, biodegradable polymers, and mixtures thereof.

According to one embodiment, the one or more stabilizer is/are a phenolic stabilizer, a phosphite and/or phosphonite stabilizer, sulphur containing stabilizer, sterically hindered amine stabilizer, UV stabilizer and mixtures thereof.

According to another embodiment, the compacted polymer-based filler material has a top cut particle size *d*₅₀ of ≤ 150 µm, more preferably of ≤ 100 µm and most preferably of ≤ 80 µm.

According to another aspect of the present invention, a process for producing the compacted polymer-based filler material as defined herein, the process comprising the steps of:
a) providing a surface-treated filler material product in an amount from 40 to 98 wt.-%, based on the total weight of the compacted polymer-based-mineral filler, the surface-treated filler material product comprising an alkaline earth metal carbonate-comprising filler material and a treatment layer on at least a part of the surface of the alkaline earth metal carbonate-comprising filler material,
   wherein the treatment layer comprises
   i) at least one mono-substituted succinic anhydride and/or at least one mono-substituted succinic acid and/or reaction products thereof, and/or
   ii) a phosphoric acid ester blend of one or more phosphoric acid mono-ester and reaction products thereof and/or one or more phosphoric acid di-ester and reaction products thereof, and/or
   iii) an aliphatic carboxylic acid having a total amount of carbon atoms from C₄ to C₂₄ and/or reaction products thereof, and/or
   iv) a polyhydrogensiloxane or an inert silicone oil and/or reaction products thereof, and/or
   v) an aliphatic aldehyde and/or reaction products thereof,
b) providing a polymer binder in an amount from 1.95 to 59.95 wt.-%, based on the total weight of the compacted polymer-based-mineral filler,
c) providing additive(s) including one or more stabilizer in an amount from 0.05 to 5 wt.-%, based on the total weight of the compacted polymer-based-mineral filler,
d) simultaneously or subsequently feeding the surface-treated filler material product of step a), the polymer binder of step b) and the additives including one or more stabilizer of step c) into a high speed mixer unit,
e) mixing the surface-treated filler material product of step a), the polymer binder of step b) and the additives including one or more stabilizer of step c) in the high speed mixer unit until formation of a compacted material, and
f) reducing the temperature of the compacted material obtained from step e) below the melting point or glass transition temperature of the polymer binder.

According to one embodiment, a rotomoulded product obtained from the compacted polymer-based filler material as defined herein is provided.

According to one embodiment, the rotomoulded product has i) a tensile modulus measured according to ISO 527-2/1B/50 at a speed of 50 mm/min in the range from 560 to 750 MPa, and/or ii) a tensile yield stress measured according to ISO 527 in the range from 560 to 750 N/mm², and/or iii) a Charpy Impact Strength (NIS+23) measured according to ISO 179-1/1e/UN at +23°C in the range from 10 to 130 kJ/m², and/or iv) a Charpy Impact Strength (NIS-40) measured according to ISO 179-1/1e/UN at -40°C in the range from 5 to 80 kJ/m².

According to another embodiment, the product is a one- or multi-layer, such as a two- or three-layer, rotomoulded product, and at least one layer is obtained from the compacted polymer-based filler material.

According to still another aspect of the present invention, a process for producing a rotomoulded product is provided, the process comprising the steps of
a) mixing a compacted polymer-based filler material as defined in any one of claims 1 to 9 with at least one polymer binder, wherein the polymer binder may be the same or different to the polymer binder in the compacted polymer-based filler material, and
b) subjecting the mixture obtained in step a) to one or more rotomoulding process(es), and
c) optionally subjecting at least one polymer binder before or after step b), preferably before step b), to one or more rotomoulding process(es), wherein the polymer binder may be the same or different to the polymer binder in the compacted polymer-based filler material.

According to an even further aspect of the present invention, the use of a compacted polymer-based filler material as defined herein as additive in a rotomoulded product is provided.

Where the term "comprising" is used in the present description and claims, it does not exclude other non-specified elements of major or minor functional importance. For the purposes of the present invention, the term "consisting of' is considered to be a preferred embodiment of the term "comprising of'. If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Terms like "obtainable" or "definable" and "obtained" or "defined" are used interchangeably. This e.g. means that, unless the context clearly dictates otherwise, the term "obtained" does not mean to indicate that e.g. an embodiment must be obtained by e.g. the sequence of steps following the term "obtained" even though such a limited understanding is always included by the terms "obtained" or "defined" as a preferred embodiment.

In the following details and preferred embodiments of the inventive compacted polymer-based filler material will be set out in more detail. It is to be understood that these technical details and embodiments also apply to the inventive products, processes and uses.

### Compacted polymer-based filler material

The compacted polymer-based filler material has a top cut particle size *d*₉₈ of ≤ 500 µm.

For example, the compacted polymer-based filler material has a top cut particle size *d*₉₈ of ≤ 400 µm, preferably of ≤ 300 and most preferably in the range from 1 to 300 µm.

Additionally, the compacted polymer-based filler material may have a weight median particle size *d*₅₀ of ≤ 150 µm, preferably of ≤ 100 µm and most preferably of ≤ 80 µm, like in the range from 10 to 80 µm.

Thus, in one embodiment the compacted polymer-based filler material has a top cut particle size *d*₉₈ of ≤ 500 µm, preferably of ≤ 400 µm, more preferably of ≤ 300 and most preferably in the range from 1 to 300 µm, and a weight median particle size *d*₅₀ of ≤ 150 µm, preferably of ≤ 100 µm and most preferably of ≤ 80 µm, like in the range from 10 to 80 µm.

Without being bound by any theory, the applicant believes that it is possible for the compacted polymer-based filler material to be well dispersed in a polymer binder used for rotomoulding. "Well dispersed" means that dispersions, which are visually tested on extruded film under a binocular magnifier with magnification of 50 of each of the dispersions made, show no black spots corresponding to the matrix polymer binders nor white spots corresponding to the at least one powder filler material. The singularized and coated particles may then form loose conglomerates, but are still separated by the polymeric surface layers. This is the desired step of compaction. The result of the compaction is an increase in bulk density, an improvement of the flowability, and the suppression of dust. As a result, the stiffness and impact properties of a final article are increased. The increase of the mechanical properties allows a reduction of the article thickness.

According to one embodiment the compacted polymer-based filler material is processable on a single-screw plastics conversion equipment. Thus, conventional compounding processes such as those using twin-screws or Farrel continuous mixers, co-kneaders, Banbury batch-mixers, or other equivalent equipment can be eliminated.

According to one embodiment, the compacted polymer-based filler material is completely redispersible in a polymer binder suitable for rotomoulding without a compounding step. By "completely re-dispersible" it is understood that dispersions, which are visually tested on extruded film under a binocular magnifier with magnification of 50 of each of the dispersions made, show no black spots corresponding to the polymer binders nor white spots corresponding to the powder material.

According to one embodiment the compacted polymer-based filler material is non-dusting. Such non dusting compacted polymer-based filler material, preferably has a screen residue of more than 80 wt.-%, preferably more than 90 wt.-% on a 45 µm screen according to ISO 3310 standard measured by sieve analysis using a Retsch AS 200 sieve tower.

According to one embodiment of the present invention, the content of the surface-treated filler material product is from 40 to 99 wt.-%, preferably from 60 to 98 wt.-%, more preferably from 75 to 95 wt.-%, most preferably from 80 to 92 wt.-%, e.g. 87 to 90 wt.-%, based on the total weight of the compacted polymer-based filler material.

The content of polymer binder in the compacted polymer-based filler material may be from 1 to 50 wt.-%, preferably from 2 to 40 wt.-%, more preferably from 5 to 25 wt.-%, especially, from 8 to 14 wt.-%, e.g. from 10 to 13 wt.-%, based on the total weight of the compacted polymer-based filler material.

The content of the surface treatment agent used in the compacted polymer-based filler material according to the present invention may depend on the specific surface area of the at least one powder material. Advantageously, is present in an amount of at least 0.1 wt.-%, based on the total dry weight of the alkaline earth metal carbonate-comprising filler material, preferably in an amount from 0.1 to 3 wt.-%.

It is required that the compacted polymer-based filler material comprises from 40 to 98 wt.-%, based on the total weight of the compacted polymer-based-mineral filler, of a surface-treated filler material product comprising an alkaline earth metal carbonate-comprising filler material and a treatment layer on at least a part of the surface of the alkaline earth metal carbonate-comprising filler material, wherein the treatment layer comprises
i) at least one mono-substituted succinic anhydride and/or at least one mono-substituted succinic acid and/or reaction products thereof, and/or
ii) a phosphoric acid ester blend of one or more phosphoric acid mono-ester and reaction products thereof and/or one or more phosphoric acid di-ester and reaction products thereof, and/or
iii) an aliphatic carboxylic acid having a total amount of carbon atoms from C₄ to C₂₄ and/or reaction products thereof, and/or
iv) a polyhydrogensiloxane or an inert silicone oil and/or reaction products thereof, and/or
v) an aliphatic aldehyde and/or reaction products thereof.

The alkaline earth metal carbonate-comprising filler material is preferably a calcium carbonate-comprising filler material.

The calcium carbonate-comprising filler material in the meaning of the present invention refers to a filler material selected from among natural ground calcium carbonate (GCC), precipitated calcium carbonate (PCC), surface-modified calcium carbonate (MCC), or mixtures thereof. According to a preferred embodiment, the calcium carbonate-comprising filler material is natural ground calcium carbonate (GCC).

GCC is understood to be a naturally occurring form of calcium carbonate, mined from sedimentary rocks such as limestone or chalk, from metamorphic marble rocks, eggshells, or seashells, and processed through a treatment such as grinding, screening and/or fractionating in wet and/or dry form, for example by a cyclone or classifier. In one embodiment of the present invention, the GCC is selected from the group comprising marble, chalk, dolomite, limestone, and mixtures thereof.

"Precipitated calcium carbonate" (PCC) in the meaning of the present invention is a synthesized material, generally obtained by precipitation following reaction of carbon dioxide and lime in an aqueous environment or by precipitation of a calcium and carbonate ion source in water or by precipitation of calcium and carbonate ions, for example CaCl₂ and Na₂CO₃, out of solution. Further possible ways of producing PCC are the lime soda process, or the Solvay process in which PCC is a by-product of ammonia production. Precipitated calcium carbonate exists in three primary crystalline forms: calcite, aragonite and vaterite, and there are many different polymorphs (crystal habits) for each of these crystalline forms. Calcite has a trigonal structure with typical crystal habits such as scalenohedral (S-PCC), rhombohedral (R-PCC), hexagonal prismatic, pinacoidal, colloidal (C-PCC), cubic, and prismatic (P-PCC). Aragonite is an orthorhombic structure with typical crystal habits of twinned hexagonal prismatic crystals, as well as a diverse assortment of thin elongated prismatic, curved bladed, steep pyramidal, chisel shaped crystals, branching tree, and coral or worm-like form. Vaterite belongs to the hexagonal crystal system. The obtained PCC slurry can be mechanically dewatered and dried.

A surface-modified calcium carbonate may feature surface-reacted GCC or PCC. A surface-reacted calcium carbonate may be prepared by providing a GCC or PCC in form of an aqueous suspension, and adding an acid to said suspension. Suitable acids are, for example, sulphuric acid, hydrochloric acid, phosphoric acid, citric acid, oxalic acid, or a mixture thereof. In a next step, the calcium carbonate is treated with gaseous carbon dioxide. If a strong acid such as sulphuric acid or hydrochloric acid is used for the acid treatment step, the carbon dioxide will form automatically *in situ.* Alternatively or additionally, the carbon dioxide can be supplied from an external source. Surface-reacted calcium carbonates are described, for example, in US 2012/0031576 A1, WO 2009/074492 A1, EP 2 264 109 A1, EP 2 070 991 A1, EP 2 264 108 A1, WO 00/39222 A1, WO 2004/083316 A1 or WO 2005/121257 A2.

In one preferred embodiment, the calcium carbonate-comprising filler material is marble.

According to one embodiment of the present invention, the amount of calcium carbonate in the alkaline earth metal carbonate-comprising filler material, preferably the calcium carbonate-comprising filler material, is at least 80 wt.-%, e.g. at least 95 wt.-%, preferably between 97 and 100 wt.-%, more preferably between 98.5 and most preferably 99.95 wt.-%, based on the total dry weight of the calcium carbonate-comprising filler material.

Alternatively, the alkaline earth metal carbonate-comprising filler material is magnesium carbonate.

The alkaline earth metal carbonate-comprising filler material is preferably in the form of a particulate material, and may have a particle size distribution as conventionally employed for the material(s) involved in the type of product to be produced. According to one embodiment of the present invention, the alkaline earth metal carbonate-comprising filler material, preferably the calcium carbonate-comprising filler material, has a weight median particle size *d*₅₀ from 0.05 µm to 30 µm, preferably from 0.5 µm to 10 µm, and most preferably from 0.5 µm to 8 µm.

According to one embodiment of the present invention, the alkaline earth metal carbonate-comprising filler material, preferably the calcium carbonate-comprising filler material, has a top cut (*d*₉₈) of ≤ 50 µm, preferably of ≤ 15 µm, more preferably of ≤ 10 µm, and most preferably of ≤ 7.5 µm.

According to another embodiment, the alkaline earth metal carbonate-comprising filler material, preferably the calcium carbonate-comprising filler material, has a BET specific surface area of from 0.5 and 150 m²/g, preferably from 0.5 to 50 m²/g, more preferably from 0.5 to 35 m²/g, and most preferably from 0.5 to 15 m²/g, as measured using nitrogen and the BET method according to ISO 9277.

According to one embodiment of the present invention, the alkaline earth metal carbonate-comprising filler material, preferably the calcium carbonate-comprising filler material, has a weight median particle size *d*₅₀ from 0.05 µm to 30 µm and/or a top cut (*d*₉₈) of ≤ 50 µm and/or a BET specific surface area of from 0.5 and 150 m²/g, as measured using nitrogen and the BET method according to ISO 9277.

In one embodiment of the present invention, the alkaline earth metal carbonate-comprising filler material is preferably a marble having a median particle size diameter *d*₅₀ value from 0.05 µm to 30 µm, preferably from 0.5 µm to 10 µm, and most preferably from 0.5 µm to 8 µm. In this case, the alkaline earth metal carbonate-comprising filler material may exhibit a BET specific surface area of from 0.5 to 150 m²/g, preferably of from 0.5 to 50 m²/g, more preferably of from 0.5 to 35 m²/g and most preferably of from 0.5 to 15 m²/g, measured using nitrogen and the BET method according to ISO 9277.

It is preferred that the alkaline earth metal carbonate-comprising filler material, preferably the calcium carbonate-comprising filler material, is a dry ground material, a material being wet ground and dried or a mixture of the foregoing materials. In general, the grinding step can be carried out with any conventional grinding device, for example, under conditions such that refinement predominantly results from impacts with a secondary body, i.e. in one or more of: a ball mill, a rod mill, a vibrating mill, a roll crusher, a centrifugal impact mill, a vertical bead mill an attrition mill, a pin mill, a hammer mill, a pulveriser, a shredder, a de-clumper, a knife cutter, or other such equipment known to the skilled man.

In case the alkaline earth metal carbonate-comprising filler material, preferably the calcium carbonate-comprising filler material, is wet ground, the grinding step may be performed under conditions such that autogenous grinding takes place and/or by horizontal ball milling, and/or other such processes known to the skilled man. It is to be noted that the same grinding methods can be used for dry grinding the calcium carbonate-comprising filler material. The wet processed ground alkaline earth metal carbonate-comprising filler material, preferably the calcium carbonate-comprising filler material, thus obtained may be washed and dewatered by well-known processes, e.g. by flocculation, filtration or forced evaporation prior to drying. The subsequent step of drying may be carried out in a single step such as spray drying, or in at least two steps, e.g. by applying a first heating step to the alkaline earth metal carbonate-comprising filler material, preferably the calcium carbonate-comprising filler material, in order to reduce the associated moisture content to a level which is not greater than about 0.5 wt.-%, based on the total dry weight of the alkaline earth metal carbonate-comprising filler material, preferably the calcium carbonate-comprising filler material,. The residual total moisture content of the filler can be measured by the Karl Fischer coulometric titration method, desorbing the moisture in an oven at 195°C and passing it continuously into the KF coulometer (Mettler Toledo coulometric KF Titrator C30, combined with Mettler oven DO 0337) using dry N₂ at 100 ml/min for 10 min. The residual total moisture content can be determined with a calibration curve and also a blind of 10 min gas flow without a sample can be taken into account. The residual total moisture content may be further reduced by applying a second heating step to the calcium carbonate-comprising filler material. In case said drying is carried out by more than one drying steps, the first step may be carried out by heating in a hot current of air, while the second and further drying steps are preferably carried out by an indirect heating in which the atmosphere in the corresponding vessel comprises a surface treatment agent. It is also common that the alkaline earth metal carbonate-comprising filler material, preferably the calcium carbonate-comprising filler material, is subjected to a beneficiation step (such as a flotation, bleaching or magnetic separation step) to remove impurities.

In one embodiment of the present invention, the alkaline earth metal carbonate-comprising filler material, preferably the calcium carbonate-comprising filler material, comprises a dry ground alkaline earth metal carbonate-comprising filler material, preferably dry ground calcium carbonate-comprising filler material. In another preferred embodiment, the alkaline earth metal carbonate-comprising filler material, preferably the calcium carbonate-comprising filler material, is a material being wet ground in a horizontal ball mill, and subsequently dried by using the well-known process of spray drying.

The surface-treated filler material product comprises an alkaline earth metal carbonate-comprising filler material and a treatment layer on at least a part of the surface of the alkaline earth metal carbonate-comprising filler material.

According to one embodiment of the present invention, the surface-treated filler material product comprises a treatment layer on at least a part of the surface of the alkaline earth metal carbonate-comprising filler material, wherein the treatment layer comprises at least one mono-substituted succinic anhydride and/or at least one mono-substituted succinic acid and/or reaction products thereof.

It is appreciated that the expression "at least one" mono-substituted succinic anhydride means that one or more kinds of mono-substituted succinic anhydride may be provided in the process of the present invention.

Accordingly, it should be noted that the at least one mono-substituted succinic anhydride may be one kind of mono-substituted succinic anhydride. Alternatively, the at least one mono-substituted succinic anhydride may be a mixture of two or more kinds of mono-substituted succinic anhydride. For example, the at least one mono-substituted succinic anhydride may be a mixture of two or three kinds of mono-substituted succinic anhydride, like two kinds of mono-substituted succinic anhydride.

In one embodiment of the present invention, the at least one mono-substituted succinic anhydride is one kind of mono-substituted succinic anhydride.

It is appreciated that the at least one mono-substituted succinic anhydride represents a surface treatment agent and consists of succinic anhydride mono-substituted with a group selected from any linear, branched, aliphatic and cyclic group having a total amount of carbon atoms from C2 to C30 in the substituent.

In one embodiment of the present invention, the at least one mono-substituted succinic anhydride consists of succinic anhydride mono-substituted with a group selected from a linear, branched, aliphatic and cyclic group having a total amount of carbon atoms from C3 to C25 in the substituent. For example, the at least one mono-substituted succinic anhydride consists of succinic anhydride mono-substituted with a group selected from a linear, branched, aliphatic and cyclic group having a total amount of carbon atoms from C4 to C20 in the substituent.

In one embodiment of the present invention, the at least one mono-substituted succinic anhydride consists of succinic anhydride mono-substituted with one group being a linear and aliphatic group having a total amount of carbon atoms from C2 to C30, preferably from C3 to C25 and most preferably from C4 to C20 in the substituent. Additionally or alternatively, the at least one mono-substituted succinic anhydride consists of succinic anhydride mono-substituted with one group being a branched and aliphatic group having a total amount of carbon atoms from C2 to C30, preferably from C3 to C25 and most preferably from C4 to C20 in the substituent.

Thus, it is preferred that the at least one mono-substituted succinic anhydride consists of succinic anhydride mono-substituted with one group being a linear or branched, alkyl group having a total amount of carbon atoms from C2 to C30, preferably from C3 to C25 and most preferably from C4 to C20 in the substituent.

For example, the at least one mono-substituted succinic anhydride consists of succinic anhydride mono-substituted with one group being a linear alkyl group having a total amount of carbon atoms from C2 to C30, preferably from C3 to C25 and most preferably from C4 to C20 in the substituent. Additionally or alternatively, the at least one mono-substituted succinic anhydride consists of succinic anhydride mono-substituted with one group being a branched alkyl group having a total amount of carbon atoms from C2 to C30, preferably from C3 to C25 and most preferably from C4 to C20 in the substituent.

The term "alkyl" in the meaning of the present invention refers to a linear or branched, saturated organic compound composed of carbon and hydrogen. In other words, "alkyl mono-substituted succinic anhydrides" are composed of linear or branched, saturated hydrocarbon chains containing a pendant succinic anhydride group.

In one embodiment of the present invention, the at least one mono-substituted succinic anhydride is at least one linear or branched alkyl mono-substituted succinic anhydride. For example, the at least one alkyl mono-substituted succinic anhydride is selected from the group comprising ethylsuccinic anhydride, propylsuccinic anhydride, butylsuccinic anhydride, triisobutyl succinic anhydride, pentylsuccinic anhydride, hexylsuccinic anhydride, heptylsuccinic anhydride, octylsuccinic anhydride, nonylsuccinic anhydride, decyl succinic anhydride, dodecyl succinic anhydride, hexadecanyl succinic anhydride, octadecanyl succinic anhydride, and mixtures thereof.

Accordingly, it is appreciated that e.g. the term "butylsuccinic anhydride" comprises linear and branched butylsuccinic anhydride(s). One specific example of linear butylsuccinic anhydride(s) is n-butylsuccinic anhydride. Specific examples of branched butylsuccinic anhydride(s) are iso-butylsuccinic anhydride, sec-butylsuccinic anhydride and/or tert-butylsuccinic anhydride.

Furthermore, it is appreciated that e.g. the term "hexadecanyl succinic anhydride" comprises linear and branched hexadecanyl succinic anhydride(s). One specific example of linear hexadecanyl succinic anhydride(s) is n-hexadecanyl succinic anhydride. Specific examples of branched hexadecanyl succinic anhydride(s) are 14-methylpentadecanyl succinic anhydride, 13-methylpentadecanyl succinic anhydride, 12-methylpentadecanyl succinic anhydride, 11-methylpentadecanyl succinic anhydride, 10-methylpentadecanyl succinic anhydride, 9-methylpentadecanyl succinic anhydride, 8-methylpentadecanyl succinic anhydride, 7-methylpentadecanyl succinic anhydride, 6-methylpentadecanyl succinic anhydride, 5-methylpentadecanyl succinic anhydride, 4-methylpentadecanyl succinic anhydride, 3-methylpentadecanyl succinic anhydride, 2-methylpentadecanyl succinic anhydride, 1-methylpentadecanyl succinic anhydride, 13-ethylbutadecanyl succinic anhydride, 12-ethylbutadecanyl succinic anhydride, 11-ethylbutadecanyl succinic anhydride, 10-ethylbutadecanyl succinic anhydride, 9-ethylbutadecanyl succinic anhydride, 8-ethylbutadecanyl succinic anhydride, 7-ethylbutadecanyl succinic anhydride, 6-ethylbutadecanyl succinic anhydride, 5-ethylbutadecanyl succinic anhydride, 4-ethylbutadecanyl succinic anhydride, 3-ethylbutadecanyl succinic anhydride, 2-ethylbutadecanyl succinic anhydride, 1-ethylbutadecanyl succinic anhydride, 2-butyldodecanyl succinic anhydride, 1-hexyldecanyl succinic anhydride, 1-hexyl-2-decanyl succinic anhydride, 2-hexyldecanyl succinic anhydride, 6,12-dimethylbutadecanyl succinic anhydride, 2,2-diethyldodecanyl succinic anhydride, 4,8,12-trimethyltridecanyl succinic anhydride, 2,2,4,6,8-pentamethylundecanyl succinic anhydride, 2-ethyl-4-methyl-2-(2-methylpentyl)-heptyl succinic anhydride and/or 2-ethyl-4,6-dimethyl-2-propylnonyl succinic anhydride.

Furthermore, it is appreciated that e.g. the term "octadecanyl succinic anhydride" comprises linear and branched octadecanyl succinic anhydride(s). One specific example of linear octadecanyl succinic anhydride(s) is n-octadecanyl succinic anhydride. Specific examples of branched hexadecanyl succinic anhydride(s) are 16-methylheptadecanyl succinic anhydride, 15-methylheptadecanyl succinic anhydride, 14-methylheptadecanyl succinic anhydride, 13-methylheptadecanyl succinic anhydride, 12-methylheptadecanyl succinic anhydride, 11-methylheptadecanyl succinic anhydride, 10-methylheptadecanyl succinic anhydride, 9-methylheptadecanyl succinic anhydride, 8-methylheptadecanyl succinic anhydride, 7-methylheptadecanyl succinic anhydride, 6-methylheptadecanyl succinic anhydride, 5-methylheptadecanyl succinic anhydride, 4-methylheptadecanyl succinic anhydride, 3-methylheptadecanyl succinic anhydride, 2-methylheptadecanyl succinic anhydride, 1-methylheptadecanyl succinic anhydride, 14-ethylhexadecanyl succinic anhydride, 13-ethylhexadecanyl succinic anhydride, 12-ethylhexadecanyl succinic anhydride, 11-ethylhexadecanyl succinic anhydride, 10-ethylhexadecanyl succinic anhydride, 9-ethylhexadecanyl succinic anhydride, 8-ethylhexadecanyl succinic anhydride, 7-ethylhexadecanyl succinic anhydride, 6-ethylhexadecanyl succinic anhydride, 5-ethylhexadecanyl succinic anhydride, 4-ethylhexadecanyl succinic anhydride, 3-ethylhexadecanyl succinic anhydride, 2-ethylhexadecanyl succinic anhydride, 1-ethylhexadecanyl succinic anhydride, 2-hexyldodecanyl succinic anhydride, 2-heptylundecanyl succinic anhydride, iso-octadecanyl succinic anhydride and/or 1-octyl-2-decanyl succinic anhydride.

In one embodiment of the present invention, the at least one alkyl mono-substituted succinic anhydride is selected from the group comprising butylsuccinic anhydride, hexylsuccinic anhydride, heptylsuccinic anhydride, octylsuccinic anhydride, hexadecanyl succinic anhydride, octadecanyl succinic anhydride, and mixtures thereof.

In one embodiment of the present invention, the at least one mono-substituted succinic anhydride is one kind of alkyl mono-substituted succinic anhydride. For example, the one alkyl mono-substituted succinic anhydride is butylsuccinic anhydride. Alternatively, the one alkyl mono-substituted succinic anhydride is hexylsuccinic anhydride. Alternatively, the one alkyl mono-substituted succinic anhydride is heptylsuccinic anhydride or octylsuccinic anhydride. Alternatively, the one alkyl mono-substituted succinic anhydride is hexadecanyl succinic anhydride. For example, the one alkyl mono-substituted succinic anhydride is linear hexadecanyl succinic anhydride such as n-hexadecanyl succinic anhydride or branched hexadecanyl succinic anhydride such as 1-hexyl-2-decanyl succinic anhydride. Alternatively, the one alkyl mono-substituted succinic anhydride is octadecanyl succinic anhydride. For example, the one alkyl mono-substituted succinic anhydride is linear octadecanyl succinic anhydride such as n-octadecanyl succinic anhydride or branched octadecanyl succinic anhydride such as iso-octadecanyl succinic anhydride or 1-octyl-2-decanyl succinic anhydride.

In one embodiment of the present invention, the one alkyl mono-substituted succinic anhydride is butylsuccinic anhydride such as n-butylsuccinic anhydride.

In one embodiment of the present invention, the at least one mono-substituted succinic anhydride is a mixture of two or more kinds of alkyl mono-substituted succinic anhydrides. For example, the at least one mono-substituted succinic anhydride is a mixture of two or three kinds of alkyl mono-substituted succinic anhydrides.

In one embodiment of the present invention, the at least one mono-substituted succinic anhydride consists of succinic anhydride mono-substituted with one group being a linear or branched alkenyl group having a total amount of carbon atoms from C2 to C30, preferably from C3 to C25 and most preferably from C4 to C20 in the substituent.

The term "alkenyl" in the meaning of the present invention refers to a linear or branched, unsaturated organic compound composed of carbon and hydrogen. Said organic compound further contains at least one double bond in the substituent, preferably one double bond. In other words, "alkenyl mono-substituted succinic anhydrides" are composed of linear or branched, unsaturated hydrocarbon chains containing a pendant succinic anhydride group. It is appreciated that the term "alkenyl" in the meaning of the present invention includes the cis and trans isomers.

In one embodiment of the present invention, the at least one mono-substituted succinic anhydride is at least one linear or branched alkenyl mono-substituted succinic anhydride. For example, the at least one alkenyl mono-substituted succinic anhydride is selected from the group comprising ethenylsuccinic anhydride, propenylsuccinic anhydride, butenylsuccinic anhydride, triisobutenyl succinic anhydride, pentenylsuccinic anhydride, hexenylsuccinic anhydride, heptenylsuccinic anhydride, octenylsuccinic anhydride, nonenylsuccinic anhydride, decenyl succinic anhydride, dodecenyl succinic anhydride, hexadecenyl succinic anhydride, octadecenyl succinic anhydride, and mixtures thereof.

Accordingly, it is appreciated that e.g. the term "hexadecenyl succinic anhydride" comprises linear and branched hexadecenyl succinic anhydride(s). One specific example of linear hexadecenyl succinic anhydride(s) is n-hexadecenyl succinic anhydride such as 14-hexadecenyl succinic anhydride, 13-hexadecenyl succinic anhydride, 12-hexadecenyl succinic anhydride, 11-hexadecenyl succinic anhydride, 10-hexadecenyl succinic anhydride, 9-hexadecenyl succinic anhydride, 8-hexadecenyl succinic anhydride, 7-hexadecenyl succinic anhydride, 6-hexadecenyl succinic anhydride, 5-hexadecenyl succinic anhydride, 4-hexadecenyl succinic anhydride, 3-hexadecenyl succinic anhydride and/or 2-hexadecenyl succinic anhydride. Specific examples of branched hexadecenyl succinic anhydride(s) are 14-methyl-9-pentadecenyl succinic anhydride, 14-methyl-2-pentadecenyl succinic anhydride, 1-hexyl-2-decenyl succinic anhydride and/or iso-hexadecenyl succinic anhydride.

Furthermore, it is appreciated that e.g. the term "octadecenyl succinic anhydride" comprises linear and branched octadecenyl succinic anhydride(s). One specific example of linear octadecenyl succinic anhydride(s) is n-octadecenyl succinic anhydride such as 16-octadecenyl succinic anhydride, 15-octadecenyl succinic anhydride, 14-octadecenyl succinic anhydride, 13-octadecenyl succinic anhydride, 12-octadecenyl succinic anhydride, 11-octadecenyl succinic anhydride, 10-octadecenyl succinic anhydride, 9-octadecenyl succinic anhydride, 8-octadecenyl succinic anhydride, 7-octadecenyl succinic anhydride, 6-octadecenyl succinic anhydride, 5-octadecenyl succinic anhydride, 4-octadecenyl succinic anhydride, 3-octadecenyl succinic anhydride and/or 2-octadecenyl succinic anhydride. Specific examples of branched octadecenyl succinic anhydride(s) are 16-methyl-9-heptadecenyl succinic anhydride, 16-methyl-7-heptadecenyl succinic anhydride, 1-octyl-2-decenyl succinic anhydride and/or iso-octadecenyl succinic anhydride.

In one embodiment of the present invention, the at least one alkenyl mono-substituted succinic anhydride is selected from the group comprising hexenylsuccinic anhydride, octenylsuccinic anhydride, hexadecenyl succinic anhydride, octadecenyl succinic anhydride, and mixtures thereof.

In one embodiment of the present invention, the at least one mono-substituted succinic anhydride is one alkenyl mono-substituted succinic anhydride. For example, the one alkenyl mono-substituted succinic anhydride is hexenylsuccinic anhydride. Alternatively, the one alkenyl mono-substituted succinic anhydride is octenylsuccinic anhydride. Alternatively, the one alkenyl mono-substituted succinic anhydride is hexadecenyl succinic anhydride. For example, the one alkenyl mono-substituted succinic anhydride is linear hexadecenyl succinic anhydride such as n-hexadecenyl succinic anhydride or branched hexadecenyl succinic anhydride such as 1-hexyl-2-decenyl succinic anhydride. Alternatively, the one alkenyl mono-substituted succinic anhydride is octadecenyl succinic anhydride. For example, the one alkyl mono-substituted succinic anhydride is linear octadecenyl succinic anhydride such as n-octadecenyl succinic anhydride or branched octadecenyl succinic anhydride such iso-octadecenyl succinic anhydride, or 1-octyl-2-decenyl succinic anhydride.

In one embodiment of the present invention, the one alkenyl mono-substituted succinic anhydride is linear octadecenyl succinic anhydride such as n-octadecenyl succinic anhydride. In another embodiment of the present invention, the one alkenyl mono-substituted succinic anhydride is linear octenylsuccinic anhydride such as n-octenylsuccinic anhydride.

If the at least one mono-substituted succinic anhydride is one alkenyl mono-substituted succinic anhydride, it is appreciated that the one alkenyl mono-substituted succinic anhydride is present in an amount of ≥ 95 wt.-% and preferably of ≥ 96.5 wt.-%, based on the total weight of the at least one mono-substituted succinic anhydride.

In one embodiment of the present invention, the at least one mono-substituted succinic anhydride is a mixture of two or more kinds of alkenyl mono-substituted succinic anhydrides. For example, the at least one mono-substituted succinic anhydride is a mixture of two or three kinds of alkenyl mono-substituted succinic anhydrides.

If the at least one mono-substituted succinic anhydride is a mixture of two or more kinds of alkenyl mono-substituted succinic anhydrides, one alkenyl mono-substituted succinic anhydride is linear or branched octadecenyl succinic anhydride, while each further alkenyl mono-substituted succinic anhydride is selected from ethenylsuccinic anhydride, propenylsuccinic anhydride, butenylsuccinic anhydride, pentenylsuccinic anhydride, hexenylsuccinic anhydride, heptenylsuccinic anhydride, nonenylsuccinic anhydride, hexadecenyl succinic anhydride and mixtures thereof. For example, the at least one mono-substituted succinic anhydride is a mixture of two or more kinds of alkenyl mono-substituted succinic anhydrides, wherein one alkenyl mono-substituted succinic anhydride is linear octadecenyl succinic anhydride and each further alkenyl mono-substituted succinic anhydride is selected from ethenylsuccinic anhydride, propenylsuccinic anhydride, butenylsuccinic anhydride, pentenylsuccinic anhydride, hexenylsuccinic anhydride, heptenylsuccinic anhydride, nonenylsuccinic anhydride, hexadecenyl succinic anhydride and mixtures thereof. Alternatively, the at least one mono-substituted succinic anhydride is a mixture of two or more kinds of alkenyl mono-substituted succinic anhydrides, wherein one alkenyl mono-substituted succinic anhydride is branched octadecenyl succinic anhydride and each further alkenyl mono-substituted succinic anhydride is selected from ethenylsuccinic anhydride, propenylsuccinic anhydride, butenylsuccinic anhydride, pentenylsuccinic anhydride, hexenylsuccinic anhydride, heptenylsuccinic anhydride, nonenylsuccinic anhydride, hexadecenyl succinic anhydride and mixtures thereof.

For example, the at least one mono-substituted succinic anhydride is a mixture of two or more kinds of alkenyl mono-substituted succinic anhydrides comprising one or more hexadecenyl succinic anhydride, like linear or branched hexadecenyl succinic anhydride(s), and one or more octadecenyl succinic anhydride, like linear or branched octadecenyl succinic anhydride(s).

In one embodiment of the present invention, the at least one mono-substituted succinic anhydride is a mixture of two or more kinds of alkenyl mono-substituted succinic anhydrides comprising linear hexadecenyl succinic anhydride(s) and linear octadecenyl succinic anhydride(s). Alternatively, the at least one mono-substituted succinic anhydride is a mixture of two or more kinds of alkenyl mono-substituted succinic anhydrides comprising branched hexadecenyl succinic anhydride(s) and branched octadecenyl succinic anhydride(s). For example, the one or more hexadecenyl succinic anhydride is linear hexadecenyl succinic anhydride like n-hexadecenyl succinic anhydride and/or branched hexadecenyl succinic anhydride like 1-hexyl-2-decenyl succinic anhydride. Additionally or alternatively, the one or more octadecenyl succinic anhydride is linear octadecenyl succinic anhydride like n-octadecenyl succinic anhydride and/or branched octadecenyl succinic anhydride like iso-octadecenyl succinic anhydride and/or 1-octyl-2-decenyl succinic anhydride.

If the at least one mono-substituted succinic anhydride is a mixture of two or more kinds of alkenyl mono-substituted succinic anhydrides, it is appreciated that one alkenyl mono-substituted succinic anhydride is present in an amount of from 20 to 60 wt.-% and preferably of from 30 to 50 wt.-%, based on the total weight of the at least one mono-substituted succinic anhydride provided.

For example, if the at least one mono-substituted succinic anhydride is a mixture of two or more kinds of alkenyl mono-substituted succinic anhydrides comprising one or more hexadecenyl succinic anhydride(s), like linear or branched hexadecenyl succinic anhydride(s), and one or more octadecenyl succinic anhydride(s), like linear or branched hexadecenyl succinic anhydride(s), it is preferred that the one or more octadecenyl succinic anhydride(s) is present in an amount of from 20 to 60 wt.-% and preferably of from 30 to 50 wt.-%, based on the total weight of the at least one mono-substituted succinic anhydride.

It is also appreciated that the at least one mono-substituted succinic anhydride may be a mixture of at least one alkyl mono-substituted succinic anhydrides and at least one alkenyl mono-substituted succinic anhydrides.

If the at least one mono-substituted succinic anhydride is a mixture of at least one alkyl mono-substituted succinic anhydrides and at least one alkenyl mono-substituted succinic anhydrides, it is appreciated that the alkyl substituent of the at least one alkyl mono-substituted succinic anhydrides and the alkenyl substituent of the at least one alkenyl mono-substituted succinic anhydrides are preferably the same. For example, the at least one mono-substituted succinic anhydride is a mixture of ethylsuccinic anhydride and ethenylsuccinic anhydride. Alternatively, the at least one mono-substituted succinic anhydride is a mixture of propylsuccinic anhydride and propenylsuccinic anhydride. Alternatively, the at least one mono-substituted succinic anhydride is a mixture of butylsuccinic anhydride and butenylsuccinic anhydride. Alternatively, the at least one mono-substituted succinic anhydride is a mixture of triisobutyl succinic anhydride and triisobutenyl succinic anhydride. Alternatively, the at least one mono-substituted succinic anhydride is a mixture of pentylsuccinic anhydride and pentenylsuccinic anhydride. Alternatively, the at least one mono-substituted succinic anhydride is a mixture of hexylsuccinic anhydride and hexenylsuccinic anhydride. Alternatively, the at least one mono-substituted succinic anhydride is a mixture of heptylsuccinic anhydride and heptenylsuccinic anhydride. Alternatively, the at least one mono-substituted succinic anhydride is a mixture of octylsuccinic anhydride and octenylsuccinic anhydride. Alternatively, the at least one mono-substituted succinic anhydride is a mixture of nonylsuccinic anhydride and nonenylsuccinic anhydride. Alternatively, the at least one mono-substituted succinic anhydride is a mixture of decyl succinic anhydride and decenyl succinic anhydride. Alternatively, the at least one mono-substituted succinic anhydride is a mixture of dodecyl succinic anhydride and dodecenyl succinic anhydride. Alternatively, the at least one mono-substituted succinic anhydride is a mixture of hexadecanyl succinic anhydride and hexadecenyl succinic anhydride. For example, the at least one mono-substituted succinic anhydride is a mixture of linear hexadecanyl succinic anhydride and linear hexadecenyl succinic anhydride or a mixture of branched hexadecanyl succinic anhydride and branched hexadecenyl succinic anhydride. Alternatively, the at least one mono-substituted succinic anhydride is a mixture of octadecanyl succinic anhydride and octadecenyl succinic anhydride. For example, the at least one mono-substituted succinic anhydride is a mixture of linear octadecanyl succinic anhydride and linear octadecenyl succinic anhydride or a mixture of branched octadecanyl succinic anhydride and branched octadecenyl succinic anhydride.

In one embodiment of the present invention, the at least one mono-substituted succinic anhydride is a mixture of nonylsuccinic anhydride and nonenylsuccinic anhydride.

If the at least one mono-substituted succinic anhydride is a mixture of at least one alkyl mono-substituted succinic anhydrides and at least one alkenyl mono-substituted succinic anhydrides, the weight ratio between the at least one alkyl mono-substituted succinic anhydride and the at least one alkenyl mono-substituted succinic anhydride is between 90:10 and 10:90 (wt.-%/wt.-%). For example, the weight ratio between the at least one alkyl mono-substituted succinic anhydride and the at least one alkenyl mono-substituted succinic anhydride is between 70:30 and 30:70 (wt.-% / wt.-%) or between 60:40 and 40:60 (wt.-% / wt.-%).

It is appreciated that the expression "at least one" mono-substituted succinic acid means that one or more kinds of mono-substituted succinic acid may be provided in the process of the present invention.

Accordingly, it should be noted that the at least one mono-substituted succinic acid may be one kind of mono-substituted succinic acid. Alternatively, the at least one mono-substituted succinic acid may be a mixture of two or more kinds of mono-substituted succinic acid. For example, the at least one mono-substituted succinic acid may be a mixture of two or three kinds of mono-substituted succinic acid, like two kinds of mono-substituted succinic acid.

In one embodiment of the present invention, the at least one mono-substituted succinic acid is one kind of mono-substituted succinic acid.

It is appreciated that the at least one mono-substituted succinic acid represents a surface treatment agent and consists of succinic acid mono-substituted with a group selected from any linear, branched, aliphatic and cyclic group having a total amount of carbon atoms from C2 to C30 in the substituent.

In one embodiment of the present invention, the at least one mono-substituted succinic acid consists of succinic acid mono-substituted with a group selected from a linear, branched, aliphatic and cyclic group having a total amount of carbon atoms from C3 to C25 in the substituent. For example, the at least one mono-substituted succinic acid consists of succinic acid mono-substituted with a group selected from a linear, branched, aliphatic and cyclic group having a total amount of carbon atoms from C4 to C20 in the substituent.

It is appreciated that the at least one mono-substituted succinic anhydride and the at least one mono-substituted succinic acid may comprise the same or different substituent.

In one embodiment of the present invention, the succinic acid molecule of the at least one mono-substituted succinic acid and the succinic anhydride molecule of the at least one mono-substituted succinic anhydride are mono-substituted with the same group selected from any linear, branched, aliphatic and cyclic group having a total amount of carbon atoms from C2 to C30, preferably from C3 to C25 and most preferably from C4 to C20 in the substituent.

If the at least one mono-substituted succinic anhydride is provided in combination with at least one mono-substituted succinic acid, the at least one mono-substituted succinic acid is present in an amount of ≤ 10 mol.-%, based on the molar sum of the at least one mono-substituted succinic anhydride and the at least one mono-substituted succinic acid. For example, the at least one mono-substituted succinic acid is present in an amount of ≤ 5 mol.-%, preferably of ≤ 2.5 mol.-% and most preferably of ≤ 1 mol.-%, based on the molar sum of the at least one mono-substituted succinic anhydride and the at least one mono-substituted succinic acid.

According to one embodiment the reaction product(s) of the mono-substituted succinic acid and/or the at least one mono-substituted succinic anhydride are one or more calcium and/or magnesium salts thereof.

According to one embodiment the reaction product(s) of the mono-substituted succinic acid and/or the at least one mono-substituted succinic anhydride formed on at least a part of the surface of the calcium carbonate-comprising filler material are one or more calcium salts and/or one or more magnesium salts thereof.

According to one embodiment the molar ratio of the at least one mono-substituted succinic anhydride and the optional at least one mono-substituted succinic acid to the reaction product(s) thereof is from 99.9:0.1 to 0.1:99.9, preferably from 70:30 to 90:10.

According to one embodiment the treatment layer further comprises an organic material such as a polysiloxane.

According to one embodiment of the present invention, the surface-treated filler material product comprises, and preferably consists of, alkaline earth metal carbonate-comprising filler material, preferably calcium carbonate-comprising filler material, and a treatment layer comprising at least one mono-substituted succinic anhydride and/or at least one mono-substituted succinic acid and/or reaction product(s) thereof. The treatment layer is formed on at least a part of the surface, preferably on the whole surface, of said alkaline earth metal carbonate-comprising filler material, preferably calcium carbonate-comprising filler material.

In case the treatment layer on the surface of the alkaline earth metal carbonate-comprising filler material, preferably calcium carbonate-comprising filler material, comprises at least one mono-substituted succinic acid, it is preferred that the at least one mono-substituted succinic acid is formed from the applied at least one mono-substituted succinic anhydride. That is to say, the substituent of the at least one mono-substituted succinic acid and the substituent of the at least one mono-substituted succinic anhydride are the same.

Additionally or alternatively, the at least one mono-substituted succinic acid is provided in a blend together with the at least one mono-substituted succinic anhydride.

In one embodiment of the present invention, the treatment layer formed on the surface of the alkaline earth metal carbonate-comprising filler material, preferably calcium carbonate-comprising filler material, comprises the at least one mono-substituted succinic anhydride and at least one mono-substituted succinic acid or reaction product(s) thereof obtained from contacting the alkaline earth metal carbonate-comprising filler material, preferably calcium carbonate-comprising filler material, with the at least one mono-substituted succinic anhydride and the optional at least one mono-substituted succinic acid. Alternatively, the treatment layer formed on the surface of the alkaline earth metal carbonate-comprising filler material, preferably calcium carbonate-comprising filler material, comprises the at least one mono-substituted succinic anhydride and at least one mono-substituted succinic acid and reaction product(s) thereof obtained from contacting the alkaline earth metal carbonate-comprising filler material, preferably calcium carbonate-comprising filler material, with the at least one mono-substituted succinic anhydride and the optional at least one mono-substituted succinic acid.

According to another embodiment of the present invention, the surface-treated filler material product comprises a treatment layer on at least a part of the surface of the alkaline earth metal carbonate-comprising filler material, preferably calcium carbonate-comprising filler material, wherein the treatment layer comprises a phosphoric acid ester blend of one or more phosphoric acid mono-ester and reaction products thereof and/or one or more phosphoric acid di-ester and reaction products thereof.

Alkyl esters of phosphoric acid are well known in the industry especially as surfactants, lubricants and antistatic agents (Die Tenside; Kosswig und Stache, Carl Hanser Verlag München, 1993).

The synthesis of alkyl esters of phosphoric acid by different methods and the surface treatment of minerals with alkyl esters of phosphoric acid are well known by the skilled man, e.g. from Pesticide Formulations and Application Systems: 15th Volume; Collins HM, Hall FR, Hopkinson M, STP1268; Published: 1996, US 3,897,519 A, US 4,921,990 A, US 4,350,645 A, US 6,710,199 B2, US 4,126,650 A, US 5,554,781 A, EP 1092000 B1 and WO 2008/023076 A1.

It is appreciated that the expression "one or more" phosphoric acid mono-ester means that one or more kinds of phosphoric acid mono-ester may be present in the phosphoric acid ester blend.

Accordingly, it should be noted that the one or more phosphoric acid mono-ester may be one kind of phosphoric acid mono-ester. Alternatively, the one or more phosphoric acid mono-ester may be a mixture of two or more kinds of phosphoric acid mono-ester. For example, the one or more phosphoric acid mono-ester may be a mixture of two or three kinds of phosphoric acid mono-ester, like two kinds of phosphoric acid mono-ester.

In one embodiment of the present invention, the one or more phosphoric acid mono-ester consists of an o-phosphoric acid molecule esterified with one alcohol selected from unsaturated or saturated, branched or linear, aliphatic or aromatic alcohols having a total amount of carbon atoms from C6 to C30 in the alcohol substituent. For example, the one or more phosphoric acid mono-ester consists of an o-phosphoric acid molecule esterified with one alcohol selected from unsaturated or saturated, branched or linear, aliphatic or aromatic alcohols having a total amount of carbon atoms from C8 to C22, more preferably from C8 to C20 and most preferably from C8 to C18 in the alcohol substituent.

In one embodiment of the present invention, the one or more phosphoric acid mono-ester consists of an o-phosphoric acid molecule esterified with one alcohol selected from saturated and linear or branched and aliphatic alcohols having a total amount of carbon atoms from C6 to C30 in the alcohol substituent. For example, the one or more phosphoric acid mono-ester consists of an o-phosphoric acid molecule esterified with one alcohol selected from saturated and linear or branched and aliphatic alcohols having a total amount of carbon atoms from C8 to C22, more preferably from C8 to C20 and most preferably from C8 to C18 in the alcohol substituent.

In one embodiment of the present invention, the one or more phosphoric acid mono-ester consists of an o-phosphoric acid molecule esterified with one alcohol selected from saturated and linear and aliphatic alcohols having a total amount of carbon atoms from C6 to C30, preferably from C8 to C22, more preferably from C8 to C20 and most preferably from C8 to C18 in the alcohol substituent. Alternatively, the one or more phosphoric acid mono-ester consists of an o-phosphoric acid molecule esterified with one alcohol selected from saturated and branched and aliphatic alcohols having a total amount of carbon atoms from C6 to C30, preferably from C8 to C22, more preferably from C8 to C20 and most preferably from C8 to C18 in the alcohol substituent.

In one embodiment of the present invention, the one or more phosphoric acid mono-ester is selected from the group comprising hexyl phosphoric acid mono-ester, heptyl phosphoric acid mono-ester, octyl phosphoric acid mono-ester, 2-ethylhexyl phosphoric acid mono-ester, nonyl phosphoric acid mono-ester, decyl phosphoric acid mono-ester, undecyl phosphoric acid mono-ester, dodecyl phosphoric acid mono-ester, tetradecyl phosphoric acid mono-ester, hexadecyl phosphoric acid mono-ester, heptylnonyl phosphoric acid mono-ester, octadecyl phosphoric acid mono-ester, 2-octyl-1-decylphosphoric acid mono-ester, 2-octyl-1-dodecylphosphoric acid mono-ester and mixtures thereof.

For example, the one or more phosphoric acid mono-ester is selected from the group comprising 2-ethylhexyl phosphoric acid mono-ester, hexadecyl phosphoric acid mono-ester, heptylnonyl phosphoric acid mono-ester, octadecyl phosphoric acid mono-ester, 2-octyl-1-decylphosphoric acid mono-ester, 2-octyl-1-dodecylphosphoric acid mono-ester and mixtures thereof. In one embodiment of the present invention, the one or more phosphoric acid mono-ester is 2-octyl-1-dodecylphosphoric acid mono-ester.

It is appreciated that the expression "one or more" phosphoric acid di-ester means that one or more kinds of phosphoric acid di-ester may be present in the treatment layer of the surface-treated material product and/or the phosphoric acid ester blend.

Accordingly, it should be noted that the one or more phosphoric acid di-ester may be one kind of phosphoric acid di-ester. Alternatively, the one or more phosphoric acid di-ester may be a mixture of two or more kinds of phosphoric acid di-ester. For example, the one or more phosphoric acid di-ester may be a mixture of two or three kinds of phosphoric acid di-ester, like two kinds of phosphoric acid di-ester.

In one embodiment of the present invention, the one or more phosphoric acid di-ester consists of an o-phosphoric acid molecule esterified with two alcohols selected from unsaturated or saturated, branched or linear, aliphatic or aromatic alcohols having a total amount of carbon atoms from C6 to C30 in the alcohol substituent. For example, the one or more phosphoric acid di-ester consists of an o-phosphoric acid molecule esterified with two fatty alcohols selected from unsaturated or saturated, branched or linear, aliphatic or aromatic alcohols having a total amount of carbon atoms from C8 to C22, more preferably from C8 to C20 and most preferably from C8 to C18 in the alcohol substituent.

It is appreciated that the two alcohols used for esterifying the phosphoric acid may be independently selected from the same or different, unsaturated or saturated, branched or linear, aliphatic or aromatic alcohols having a total amount of carbon atoms from C6 to C30 in the alcohol substituent. In other words, the one or more phosphoric acid di-ester may comprise two substituents being derived from the same alcohols or the phosphoric acid di-ester molecule may comprise two substituents being derived from different alcohols.

In one embodiment of the present invention, the one or more phosphoric acid di-ester consists of an o-phosphoric acid molecule esterified with two alcohols selected from the same or different, saturated and linear or branched and aliphatic alcohols having a total amount of carbon atoms from C6 to C30 in the alcohol substituent. For example, the one or more phosphoric acid di-ester consists of an o-phosphoric acid molecule esterified with two alcohols selected from the same or different, saturated and linear or branched and aliphatic alcohols having a total amount of carbon atoms from C8 to C22, more preferably from C8 to C20 and most preferably from C8 to C18 in the alcohol substituent.

In one embodiment of the present invention, the one or more phosphoric acid di-ester consists of an o-phosphoric acid molecule esterified with two alcohols selected from the same or different, saturated and linear and aliphatic alcohols having a total amount of carbon atoms from C6 to C30, preferably from C8 to C22, more preferably from C8 to C20 and most preferably from C8 to C18 in the alcohol substituent. Alternatively, the one or more phosphoric acid di-ester consists of an o-phosphoric acid molecule esterified with two alcohols selected from the same or different, saturated and branched and aliphatic alcohols having a total amount of carbon atoms from C6 to C30, preferably from C8 to C22, more preferably from C8 to C20 and most preferably from C8 to C18 in the alcohol substituent.

In one embodiment of the present invention, the one or more phosphoric acid di-ester is selected from the group comprising hexyl phosphoric acid di-ester, heptyl phosphoric acid di-ester, octyl phosphoric acid di-ester, 2-ethylhexyl phosphoric acid di-ester, nonyl phosphoric acid di-ester, decyl phosphoric acid di-ester, undecyl phosphoric acid di-ester, dodecyl phosphoric acid di-ester, tetradecyl phosphoric acid di-ester, hexadecyl phosphoric acid di-ester, heptylnonyl phosphoric acid di-ester, octadecyl phosphoric acid di-ester, 2-octyl-1-decylphosphoric acid di-ester, 2-octyl-1-dodecylphosphoric acid di-ester and mixtures thereof.

For example, the one or more phosphoric acid di-ester is selected from the group comprising 2-ethylhexyl phosphoric acid di-ester, hexadecyl phosphoric acid di-ester, heptylnonyl phosphoric acid di-ester, octadecyl phosphoric acid di-ester, 2-octyl-1-decylphosphoric acid di-ester, 2-octyl-1-dodecylphosphoric acid di-ester and mixtures thereof. In one embodiment of the present invention, the one or more phosphoric acid di-ester is 2-octyl-1-dodecylphosphoric acid di-ester.

In one embodiment of the present invention, the one or more phosphoric acid mono-ester is selected from the group comprising 2-ethylhexyl phosphoric acid mono-ester, hexadecyl phosphoric acid mono-ester, heptylnonyl phosphoric acid mono-ester, octadecyl phosphoric acid mono-ester, 2-octyl-1-decylphosphoric acid mono-ester, 2-octyl-1-dodecylphosphoric acid mono-ester and mixtures thereof and the one or more phosphoric acid di-ester is selected from the group comprising 2-ethylhexyl phosphoric acid di-ester, hexadecyl phosphoric acid di-ester, heptylnonyl phosphoric acid di-ester, octadecyl phosphoric acid di-ester, 2-octyl-1-decylphosphoric acid di-ester, 2-octyl-1-dodecylphosphoric acid di-ester and mixtures thereof.

For example, at least a part of the surface of the alkaline earth metal carbonate-comprising filler material, preferably calcium carbonate-comprising filler material, comprises a phosphoric acid ester blend of one phosphoric acid mono-ester and reaction products thereof and one phosphoric acid di-ester and reaction products thereof. In this case, the one phosphoric acid mono-ester is selected from the group comprising 2-ethylhexyl phosphoric acid mono-ester, hexadecyl phosphoric acid mono-ester, heptylnonyl phosphoric acid mono-ester, octadecyl phosphoric acid mono-ester, 2-octyl-1-decylphosphoric acid mono-ester and 2-octyl-1-dodecylphosphoric acid mono-ester, the one phosphoric acid di-ester is selected from the group comprising 2-ethylhexyl phosphoric acid di-ester, hexadecyl phosphoric acid di-ester, heptylnonyl phosphoric acid di-ester, octadecyl phosphoric acid di-ester, 2-octyl-1-decylphosphoric acid di-ester and 2-octyl-1-dodecylphosphoric acid di-ester.

If at least a part of the surface of the alkaline earth metal carbonate-comprising filler material, preferably calcium carbonate-comprising filler material, comprises a phosphoric acid ester blend of one phosphoric acid mono-ester and reaction products thereof and one phosphoric acid di-ester and reaction products thereof, it is appreciated that the alcohol substituent of the one phosphoric acid mono-ester and the one phosphoric acid di-ester are preferably the same. For example, at least a part of the surface of the alkaline earth metal carbonate-comprising filler material, preferably calcium carbonate-comprising filler material, comprises a phosphoric acid ester blend of 2-ethylhexyl phosphoric acid mono-ester and reaction products thereof and 2-ethylhexyl phosphoric acid di-ester and reaction products thereof. Alternatively, at least a part of the surface of the alkaline earth metal carbonate-comprising filler material, preferably calcium carbonate-comprising filler material, comprises a phosphoric acid ester blend of 2-octyl-1-decyl phosphoric acid mono-ester and reaction products thereof and 2-octyl-1-decyl phosphoric acid di-ester and reaction products thereof. Alternatively, at least a part of the surface of the alkaline earth metal carbonate-comprising filler material, preferably calcium carbonate-comprising filler material, comprises a phosphoric acid ester blend of hexadecyl phosphoric acid mono-ester and reaction products thereof and hexadecyl phosphoric acid di-ester and reaction products thereof. Alternatively, at least a part of the surface of the alkaline earth metal carbonate-comprising filler material, preferably calcium carbonate-comprising filler material, comprises a phosphoric acid ester blend of octadecyl phosphoric acid mono-ester and reaction products thereof and octadecyl phosphoric acid di-ester and reaction products thereof. Alternatively, at least a part of the surface of the alkaline earth metal carbonate-comprising filler material, preferably calcium carbonate-comprising filler material, comprises a phosphoric acid ester blend of 2-octyl-1-dodecylphosphoric acid mono-ester and reaction products thereof and 2-octyl-1-dodecylphosphoric acid di-ester and reaction products thereof.

In one embodiment of the present invention, at least a part of the surface of the alkaline earth metal carbonate-comprising filler material, preferably calcium carbonate-comprising filler material, comprises a phosphoric acid ester blend of two or more phosphoric acid mono-esters and reaction products thereof and two or more phosphoric acid di-ester and reaction products thereof. In this case, the two or more phosphoric acid mono-esters are selected from the group comprising 2-ethylhexyl phosphoric acid mono-ester, hexadecyl phosphoric acid mono-ester, heptylnonyl phosphoric acid mono-ester, octadecyl phosphoric acid mono-ester, 2-octyl-1-decyl phosphoric acid mono-ester and 2-octyl-1-dodecylphosphoric acid mono-ester, the two or more phosphoric acid di-ester are selected from the group comprising 2-ethylhexyl phosphoric acid di-ester, hexadecyl phosphoric acid di-ester, heptylnonyl phosphoric acid di-ester, octadecyl phosphoric acid di-ester, 2-octyl-1-decyl phosphoric acid di-ester and 2-octyl-1-dodecylphosphoric acid di-ester.

In one embodiment of the present invention, at least a part of the surface of the alkaline earth metal carbonate-comprising filler material, preferably calcium carbonate-comprising filler material, comprises a phosphoric acid ester blend of two phosphoric acid mono-esters and reaction products thereof and two phosphoric acid di-esters and reaction products thereof. For example, at least a part of the surface of the calcium carbonate-comprising filler material comprises a phosphoric acid ester blend of hexadecyl phosphoric acid mono-ester, octadecyl phosphoric acid mono-ester, hexadecyl phosphoric acid di-ester, octadecyl phosphoric acid di-ester and reaction products thereof.

According to one embodiment of the present invention, the phosphoric acid ester blend of the alkaline earth metal carbonate-comprising filler material, preferably calcium carbonate-comprising filler material, comprises the one or more phosphoric acid mono-ester and reaction products thereof to the one or more phosphoric acid di-ester and reaction products thereof in a specific molar ratio. In particular, the molar ratio of the one or more phosphoric acid mono-ester and reaction products thereof to the one or more phosphoric acid di-ester and reaction products thereof in the coating layer and/or the phosphoric acid ester blend can be from 1:1 to 1:100.

The wording "molar ratio of the one or more phosphoric acid mono-ester and reaction products thereof to the one or more phosphoric acid di-ester and reaction products thereof" in the meaning of the present invention refers to the sum of the molecular weight of the phosphoric acid mono-ester molecules and the sum of the molecular weight of the phosphoric acid mono-ester molecules in the reaction products thereof to the sum of the molecular weight of the phosphoric acid di-ester molecules and the sum of the molecular weight of the phosphoric acid di-ester molecules in the reaction products thereof.

According to one embodiment the molar ratio of the one or more phosphoric acid mono-ester and reaction products thereof to the one or more phosphoric acid di-ester and reaction products thereof in the phosphoric acid ester blend is from 1:1 to 1:100, preferably from 1:1.1 to 1:80, more preferably from 1:1.1 to 1:60, even more preferably from 1:1.1 to 1:40, still even more preferably from 1:1.1 to 1:20, and most preferably from 1:1.1 to 1:10.

Additionally or alternatively, the phosphoric acid ester blend of the treatment layer comprises the one or more phosphoric acid mono-ester and reaction products thereof in an amount of from 1 to 50 mol.-%, based on the molar sum of the one or more phosphoric acid mono-ester and reaction products thereof and the one or more phosphoric acid di-ester and reaction products thereof. For example, the phosphoric acid ester blend of the treatment layer comprises the one or more phosphoric acid mono-ester and reaction products thereof in an amount of from 10 to 45 mol.-%, based on the molar sum of the one or more phosphoric acid mono-ester and reaction products thereof and the one or more phosphoric acid di-ester and reaction products thereof.

According to one embodiment of the present invention,
I) the one or more phosphoric acid mono-ester consists of an o-phosphoric acid molecule mono-esterified with one alcohol molecule selected from unsaturated or saturated, branched or linear, aliphatic or aromatic alcohols having a total amount of carbon atoms from C6 to C30, preferably from C8 to C22, more preferably from C8 to C20, and most preferably from C8 to C18 in the alcohol substituent, and/or
II) the one or more phosphoric acid di-ester consists of an o-phosphoric acid molecule di-esterified with two alcohol molecules selected from the same or different, unsaturated or saturated, branched or linear, aliphatic or aromatic fatty alcohols having a total amount of carbon atoms from C6 to C30, preferably from C8 to C22, more preferably from C8 to C20, and most preferably from C8 to C18 in the alcohol substituent.

In one embodiment of the present invention, the phosphoric acid ester blend of the treatment layer further comprises one or more phosphoric acid tri-ester and/or phosphoric acid and reaction products thereof.

The term "phosphoric acid tri-ester" in the meaning of the present invention refers to an o-phosphoric acid molecule tri-esterified with three alcohol molecules selected from the same or different, unsaturated or saturated, branched or linear, aliphatic or aromatic alcohols having a total amount of carbon atoms from C6 to C30, preferably from C8 to C22, more preferably from C8 to C20 and most preferably from C8 to C18 in the alcohol substituent.

It is appreciated that the expression "one or more" phosphoric acid tri-ester means that one or more kinds of phosphoric acid tri-ester may be present on at least a part of the surface of the alkaline earth metal carbonate-comprising filler material, preferably calcium carbonate-comprising filler material.

Accordingly, it should be noted that the one or more phosphoric acid tri-ester may be one kind of phosphoric acid tri-ester. Alternatively, the one or more phosphoric acid tri-ester may be a mixture of two or more kinds of phosphoric acid tri-ester. For example, the one or more phosphoric acid tri-ester may be a mixture of two or three kinds of phosphoric acid tri-ester, like two kinds of phosphoric acid tri-ester.

In one embodiment of the present invention, the one or more phosphoric acid tri-ester consists of an o-phosphoric acid molecule esterified with three alcohols selected from the same or different, unsaturated or saturated, branched or linear, aliphatic or aromatic alcohols having a total amount of carbon atoms from C6 to C30 in the alcohol substituent. For example, the one or more phosphoric acid tri-ester consists of an o-phosphoric acid molecule esterified with three alcohols selected from the same or different, unsaturated or saturated, branched or linear, aliphatic or aromatic fatty alcohols having a total amount of carbon atoms from C8 to C22, more preferably from C8 to C20 and most preferably from C8 to C18 in the alcohol substituent.

It is appreciated that the three alcohols used for esterifying the phosphoric acid may be independently selected from unsaturated or saturated, branched or linear, aliphatic or aromatic alcohols having a total amount of carbon atoms from C6 to C30 in the alcohol substituent. In other words, the one or more phosphoric acid tri-ester molecule may comprise three substituents being derived from the same alcohols or the phosphoric acid tri-ester molecule may comprise three substituents being derived from different alcohols.

In one embodiment of the present invention, the one or more phosphoric acid tri-ester consists of an o-phosphoric acid molecule esterified with three alcohols selected from the same or different, saturated and linear or branched and aliphatic alcohols having a total amount of carbon atoms from C6 to C30 in the alcohol substituent. For example, the one or more phosphoric acid tri-ester consists of an o-phosphoric acid molecule esterified with three alcohols selected from the same or different, saturated and linear or branched and aliphatic alcohols having a total amount of carbon atoms from C8 to C22, more preferably from C8 to C20 and most preferably from C8 to C18 in the alcohol substituent.

In one embodiment of the present invention, the one or more phosphoric acid tri-ester consists of an o-phosphoric acid molecule esterified with three alcohols selected from saturated and linear and aliphatic alcohols having a total amount of carbon atoms from C6 to C30, preferably from C8 to C22, more preferably from C8 to C20 and most preferably from C8 to C18 in the alcohol substituent. Alternatively, the one or more phosphoric acid tri-ester consists of an o-phosphoric acid molecule esterified with three alcohols selected from saturated and branched and aliphatic alcohols having a total amount of carbon atoms from C6 to C30, preferably from C8 to C22, more preferably from C8 to C20 and most preferably from C8 to C18 in the alcohol substituent.

In one embodiment of the present invention, the one or more phosphoric acid tri-ester is selected from the group comprising hexyl phosphoric acid tri-ester, heptyl phosphoric acid tri-ester, octyl phosphoric acid tri-ester, 2-ethylhexyl phosphoric acid tri-ester, nonyl phosphoric acid tri-ester, decyl phosphoric acid tri-ester, undecyl phosphoric acid tri-ester, dodecyl phosphoric acid tri-ester, tetradecyl phosphoric acid tri-ester, hexadecyl phosphoric acid tri-ester, heptylnonyl phosphoric acid tri-ester, octadecyl phosphoric acid tri-ester, 2-octyl-1-decylphosphoric acid tri-ester, 2-octyl-1-dodecylphosphoric acid tri-ester and mixtures thereof.

For example, the one or more phosphoric acid tri-ester is selected from the group comprising 2-ethylhexyl phosphoric acid tri-ester, hexadecyl phosphoric acid tri-ester, heptylnonyl phosphoric acid tri-ester, octadecyl phosphoric acid tri-ester, 2-octyl-1-decylphosphoric acid tri-ester, 2-octyl-1-dodecylphosphoric acid tri-ester and mixtures thereof.

In one embodiment of the present invention, at least a part of the surface of the alkaline earth metal carbonate-comprising filler material, preferably calcium carbonate-comprising filler material, comprises a phosphoric acid ester blend of one or more phosphoric acid mono-ester and reaction products thereof and one or more phosphoric acid di-ester and reaction products thereof and one or more phosphoric acid tri-ester and optionally phosphoric acid and reaction products thereof. For example, at least a part of the surface of the alkaline earth metal carbonate-comprising filler material, preferably calcium carbonate-comprising filler material, comprises a phosphoric acid ester blend of the one or more phosphoric acid mono-ester and reaction products thereof and one or more phosphoric acid di-ester and reaction products thereof and one or more phosphoric acid tri-ester and phosphoric acid and reaction products thereof.

Alternatively, at least a part of the surface of the alkaline earth metal carbonate-comprising filler material, preferably calcium carbonate-comprising filler material, comprises a phosphoric acid ester blend of the one or more phosphoric acid mono-ester and reaction products thereof and one or more phosphoric acid di-ester and reaction products thereof and optionally phosphoric acid and reaction products thereof. For example, at least a part of the surface of the alkaline earth metal carbonate-comprising filler material, preferably calcium carbonate-comprising filler material, comprises a phosphoric acid ester blend of the one or more phosphoric acid mono-ester and reaction products thereof and one or more phosphoric acid di-ester and reaction products thereof and phosphoric acid and reaction products thereof.

If at least a part of the surface of the alkaline earth metal carbonate-comprising filler material, preferably calcium carbonate-comprising filler material, comprises a phosphoric acid ester blend comprising one or more phosphoric acid tri-ester, it is preferred that the phosphoric acid ester blend comprises the one or more phosphoric acid tri-ester in an amount of ≤ 10 mol.-%, based on the molar sum of the one or more phosphoric acid mono-ester and reaction products thereof and the one or more phosphoric acid di-ester and reaction products thereof and one or more phosphoric acid tri-ester and the phosphoric acid and reaction products thereof. For example, the phosphoric acid ester blend comprises the one or more phosphoric acid tri-ester in an amount of ≤ 8 mol.-%, preferably of ≤ 6 mol.-%, and more preferably of ≤ 4 mol.-%, like from 0.1 to 4 mol.-%, based on the molar sum of the one or more phosphoric acid mono-ester and reaction products thereof and the one or more phosphoric acid di-ester and reaction products thereof and one or more phosphoric acid tri-ester and the phosphoric acid and reaction products thereof.

Additionally or alternatively, if at least a part of the surface of the alkaline earth metal carbonate-comprising filler material, preferably calcium carbonate-comprising filler material, comprises a phosphoric acid ester blend comprising phosphoric acid and reaction products thereof, it is preferred that the phosphoric acid ester blend comprises the phosphoric acid and reaction products thereof in an amount of ≤ 10 mol.-%, based on the molar sum of the one or more phosphoric acid mono-ester and reaction products thereof and the one or more phosphoric acid di-ester and reaction products thereof and one or more phosphoric acid tri-ester and the phosphoric acid and reaction products thereof. For example, the phosphoric acid ester blend comprises the phosphoric acid and reaction products thereof in an amount of ≤ 8 mol.-%, preferably of ≤ 6 mol.-%, and more preferably of ≤ 4 mol.-%, like from 0.1 to 4 mol.-%, based on the molar sum of the one or more phosphoric acid mono-ester and reaction products thereof and the one or more phosphoric acid di-ester and reaction products thereof and one or more phosphoric acid tri-ester and the phosphoric acid and reaction products thereof.

If the phosphoric acid ester blend further comprises phosphoric acid and reaction products thereof and one or more phosphoric acid tri-ester, it is thus preferred that the molar ratio of the phosphoric acid and reaction products thereof to the one or more phosphoric acid mono-ester and reaction products thereof to the one or more phosphoric acid di-ester and reaction products thereof to the one or more phosphoric acid tri-ester in the phosphoric acid ester blend is ≤ 10 mol.-% : ≤ 40 mol.-% : ≥ 40 mol.% : ≤ 10 mol.-%, based on the molar sum of the one or more phosphoric acid mono-ester and reaction products thereof and the one or more phosphoric acid di-ester and reaction products thereof and the one or more phosphoric acid tri-ester and the phosphoric acid and reaction products thereof.

The wording "molar ratio of the phosphoric acid and reaction products thereof to the one or more phosphoric acid mono-ester and reaction products thereof to the one or more phosphoric acid di-ester and reaction products thereof to the one or more phosphoric acid tri-ester" in the meaning of the present invention refers to the sum of the molecular weight of the phosphoric acid and the sum of the molecular weight of the phosphoric acid molecules in the eaction products thereof to the sum of the molecular weight of the phosphoric acid mono-ester molecules and the sum of the molecular weight of the phosphoric acid mono-ester molecules in the reaction products thereof to the sum of the molecular weight of the phosphoric acid di-ester molecules and the sum of the molecular weight of the phosphoric acid di-ester molecules in the reaction products thereof to the sum of the molecular weight of the phosphoric acid tri-ester molecules.

It is appreciated that the phosphoric acid ester blend may comprise reaction products obtained from contacting the alkaline earth metal carbonate-comprising filler material, preferably calcium carbonate-comprising filler material, with the one or more phosphoric acid mono-ester and one or more phosphoric acid di-ester and optionally phosphoric acid. In such a case, the phosphoric acid ester blend preferably comprises reaction products such as one or more strontium, calcium, magnesium and/or aluminium salts of phosphoric acid mono-esters and one or more calcium, magnesium and/or aluminium salts of phosphoric acid di-ester and optionally one or more strontium, calcium, magnesium and/or aluminium salts of phosphoric acid.

In one embodiment of the present invention, the one or more phosphoric acid mono-ester and/or the one or more phosphoric acid di-ester and optionally the phosphoric acid may be at least partially neutralized by one or more hydroxides of a mono- and/or bi- and/or trivalent cation and/or one or more salts of a weak acid of a mono- and/or bi- and/or trivalent cation before the surface-treated filler material product is prepared. The one or more hydroxides of a bi- and/or trivalent cation may be selected from Ca(OH)₂, Mg(OH)₂, Al(OH)₃ and mixtures thereof.

Additionally or alternatively, if the one or more phosphoric acid mono-ester and/or the one or more phosphoric acid di-ester and optionally the phosphoric acid is at least partially neutralized by one or more hydroxides and/or one or more salts of a weak acid of a monovalent cation, the amount of monovalent cations is preferably ≤ 10 mol.-%, based on the molar sum of acidic groups in the one or more phosphoric acid mono-ester and the one or more phosphoric acid di-ester and optionally the phosphoric acid, the one or more hydroxide and/or the one or more salt of a weak acid of a monovalent cation to neutralize may be selected from LiOH, NaOH, KOH, Na₂CO₃, Li₂CO₃, K₂CO₃ and mixtures thereof.

In one embodiment of the present invention, the bivalent cations used for the partial neutralization of the one or more phosphoric acid mono-ester and/or the one or more phosphoric acid di-ester and optional the phosphoric acid are derived from salts of weak acids of such cations, preferably from carbonates and/or borates, such as calcium carbonate.

The term "weak acid" in the meaning of the present application refers to a Bronsted-Lowry acid, i.e. an H₃O⁺ -ion provider, featuring a pKₐ of > 2, preferably from 4 to 7. Accordingly, the phosphoric acid ester blend of the treatment layer may further comprise reaction products such as one or more magnesium salts of phosphoric acid mono-esters and one or more magnesium salts of phosphoric acid di-ester and optionally one or more magnesium salts of phosphoric acid. Additionally or alternatively, the phosphoric acid ester blend of the treatment layer further comprises reaction products such as one or more aluminium salts of phosphoric acid mono-esters and one or more aluminium salts of phosphoric acid di-ester and optionally one or more aluminium salts of phosphoric acid. Additionally or alternatively, the phosphoric acid ester blend of the treatment layer further comprises reaction products such as one or more lithium salts of phosphoric acid mono-esters and one or more lithium salts of phosphoric acid di-ester and optionally one or more lithium salts of phosphoric acid. Additionally or alternatively, the phosphoric acid ester blend of the treatment layer further comprises reaction products such as one or more sodium salts of phosphoric acid mono-esters and one or more sodium salts of phosphoric acid di-ester and optionally one or more sodium salts of phosphoric acid. Additionally or alternatively, the phosphoric acid ester blend of the treatment layer further comprises reaction products such as one or more potassium salts of phosphoric acid mono-esters and one or more potassium salts of phosphoric acid di-ester and optionally one or more potassium salts of phosphoric acid.

If the one or more phosphoric acid mono-ester and/or the one or more phosphoric acid di-ester and optionally the phosphoric acid is at least partially neutralized by one or more hydroxides and/or one or more salts of a weak acid of a monovalent cation, the treatment layer and/or the phosphoric acid ester blend preferably comprises an amount of monovalent cations of ≤ 10 mol.-%, based on the molar sum of acidic groups in the one or more phosphoric acid mono-ester and the one or more phosphoric acid di-ester and optionally the phosphoric acid.

In one embodiment of the present invention, the phosphoric acid ester blend of the treatment layer may further comprise additional surface treatment agents that do not correspond to the one or more phosphoric acid mono-ester, one or more phosphoric acid di-ester and the optional one or more phosphoric acid tri-ester and/or phosphoric acid of the present invention. Such additional surface treatment agents are preferably at least one organic material such as a polysiloxane. For example, the polysiloxane is preferably a polydimethylsiloxane (PDMS).

The polysiloxane is preferably present in a quantity such that the total amount of said polysiloxane on at least a part of the surface of the calcium carbonate-comprising filler material is less than 1 000 ppm, more preferably less than 800 ppm and most preferably less than 600 ppm. For example, the total amount of the polysiloxane on at least a part of the surface of the calcium carbonate-comprising filler material is from 100 to 1 000 ppm, more preferably from 200 to 800 ppm and most preferably from 300 to 600 ppm, e.g. from 400 to 600 ppm.

In one embodiment of the present invention, the phosphoric acid ester blend of the treatment layer contains < 50 ppm of C4 to C24 carboxylic acids.

According to one embodiment of the present invention, the surface-treated filler material product comprises, and preferably consists of, alkaline earth metal carbonate-comprising filler material, preferably calcium carbonate-comprising filler material, and a treatment layer comprising an aliphatic carboxylic acid having a total amount of carbon atoms from C4 to C24 and/or reaction products thereof. The treatment layer is formed on at least a part of the surface, preferably on the whole surface, of said alkaline earth metal carbonate-comprising filler material, preferably calcium carbonate-comprising filler material.

In case the treatment layer on the surface of the alkaline earth metal carbonate-comprising filler material, preferably calcium carbonate-comprising filler material, comprises an aliphatic carboxylic acid having a total amount of carbon atoms from C4 to C24 and/or reaction products thereof, it is preferred that a suitable aliphatic carboxylic acid having a total amount of carbon atoms from C4 to C24 is for example an aliphatic linear or branched carboxylic acid having between 4 and 24 carbon atoms.

The term "reaction products" of the aliphatic carboxylic acid in the meaning of the present invention refers to products obtained by contacting the alkaline earth metal carbonate-comprising filler material, preferably calcium carbonate-comprising filler material, with the aliphatic carboxylic acid. Said reaction products are formed between at least a part of the applied aliphatic carboxylic acid and reactive molecules located at the surface of the alkaline earth metal carbonate-comprising filler material, preferably calcium carbonate-comprising filler material.

The aliphatic linear or branched carboxylic acid in the meaning of the present invention may be selected from one or more straight chain, branched chain, saturated, unsaturated and/or alicyclic carboxylic acids. Preferably, the aliphatic linear or branched carboxylic acid is a monocarboxylic acid, i.e. the aliphatic linear or branched carboxylic acid is characterized in that a single carboxyl group is present. Said carboxyl group is placed at the end of the carbon skeleton.

In one embodiment of the present invention, the aliphatic linear or branched carboxylic acid is selected from saturated unbranched carboxylic acids, that is to say the aliphatic linear or branched carboxylic acid is preferably selected from the group of carboxylic acids consisting of butanoic acid, pentanoic acid, hexanoic acid, heptanoic acid, octanoic acid, nonanoic acid, decanoic acid, undecanoic acid, lauric acid, tridecanoic acid, myristic acid, pentadecanoic acid, palmitic acid, heptadecanoic acid, stearic acid, nonadecanoic acid, arachidic acid, heneicosanoic acid, behenic acid, tricosanoic acid, lignoceric acid and mixtures thereof.

In another embodiment of the present invention, the aliphatic linear or branched carboxylic acid is selected from the group consisting of octanoic acid, decanoic acid, lauric acid, myristic acid, palmitic acid, stearic acid, arachidic acid and mixtures thereof. Preferably, the aliphatic linear or branched carboxylic acid is selected from the group consisting of myristic acid, palmitic acid, stearic acid and mixtures thereof.

For example, the aliphatic linear or branched carboxylic acid is stearic acid.

According to one embodiment of the present invention, the surface-treated filler material product comprises, and preferably consists of, alkaline earth metal carbonate-comprising filler material, preferably calcium carbonate-comprising filler material, and a treatment layer comprising a polyhydrogensiloxane and/or reaction products thereof on at least a part of the accessible surface area of the alkaline earth metal carbonate-comprising filler material, preferably calcium carbonate-comprising filler material.

Suitable polyhydrogensiloxanes and corresponding reaction products thereof are described in EP 2 843 005 A1, which is thus incorporated herewith by reference.

According to one embodiment of the present invention, the surface-treated filler material product comprises, and preferably consists of, alkaline earth metal carbonate-comprising filler material, preferably calcium carbonate-comprising filler material, and a treatment layer comprising an inert silicone oil and/or reaction products thereof on at least a part of the accessible surface area of the alkaline earth metal carbonate-comprising filler material, preferably calcium carbonate-comprising filler material.

For example, the inert silicone oil is preferably a polydimethylsiloxane (PDMS).

According to one embodiment of the present invention, the surface-treated filler material product comprises, and preferably consists of, alkaline earth metal carbonate-comprising filler material, preferably calcium carbonate-comprising filler material, and a treatment layer comprising an aliphatic aldehyde and/or reaction products thereof on at least a part of the accessible surface area of the alkaline earth metal carbonate-comprising filler material, preferably calcium carbonate-comprising filler material.

Suitable aliphatic aldehydes and corresponding reaction products thereof are described in EP 2 390 285 A1, which is thus incorporated herewith by reference.

According to the present invention the alkaline earth metal carbonate-comprising filler material, preferably calcium carbonate-comprising filler material, has a residual moisture content of ≤ 1 wt.-%, based on the total dry weight of the alkaline earth metal carbonate-comprising filler material, preferably calcium carbonate-comprising filler material. Depending on the alkaline earth metal carbonate-comprising filler material, preferably calcium carbonate-comprising filler material, the filler material has a residual total moisture content of from 0.01 to 1 wt.-%, preferably from 0.01 to 0.2 wt.-%, more preferably from 0.02 to 0.15 wt.-% and most preferably from 0.04 to 0.15 wt.-%, based on the total dry weight of the alkaline earth metal carbonate-comprising filler material, preferably calcium carbonate-comprising filler material.

For example, in case a wet ground and spray dried marble is used as alkaline earth metal carbonate-comprising filler material, the residual total moisture content of the filler material is preferably from 0.01 to 0.1 wt.-%, more preferably from 0.02 to 0.08 wt.-%, and most preferably from 0.04 to 0.07 wt.-%, based on the total dry weight of the alkaline earth metal carbonate-comprising filler material. If a PCC is used as alkaline earth metal carbonate-comprising filler material, the residual total moisture content of the filler material is preferably of from 0.01 to 0.2 wt.-%, more preferably from 0.05 to 0.17 wt.-%, and most preferably from 0.05 to 0.10 wt.-%, based on the total dry weight of the alkaline earth metal carbonate-comprising filler material.

According to the present invention the surface-treated filler material product further comprises a treatment layer on at least a part of the surface of the alkaline earth metal carbonate-comprising filler material, preferably calcium carbonate-comprising filler material.

According to one embodiment the surface-treated filler material product comprises the treatment layer in an amount of at least 0.1 wt.-%, based on the total dry weight of the alkaline earth metal carbonate-comprising filler material, preferably calcium carbonate-comprising filler material, preferably in an amount from 0.1 to 3 wt.-%.

According to one embodiment the surface-treated filler material product comprises the treatment layer in an amount from 0.1 to 2.5 wt.-%, preferably in an amount of from 0.1 to 2 wt.-%, more preferably in an amount of from 0.1 to 1.5 wt.-%, even more preferably in an amount of from 0.1 to 1 wt.-%, and most preferably in an amount of from 0.2 to 0.8 wt.-%, based on the total dry weight of the alkaline earth metal carbonate-comprising filler material, preferably calcium carbonate-comprising filler material.

According to one embodiment the treatment layer is on the whole surface of the alkaline earth metal carbonate-comprising filler material, preferably calcium carbonate-comprising filler material.

Methods for preparing the surface-treated filler material products are described in WO 2014/060286 A1 and WO 2014/128087 A1.

It is a further requirement that the compacted polymer-based filler material comprises a polymer binder in an amount from 1.95 to 59.95 wt.-%, based on the total weight of the compacted polymer-based filler material. According to one embodiment, the polymer binder is present in an amount from 2 to 40 wt.-%, more preferably from 3 to 25 wt.-%, and most preferably from 5 to 20 wt.-%.

It is appreciated that the polymer binder is used to separate the single particles in the compacted polymer-based filler material, and is not chemically bound to the surface of the surface-treated filler material product.

According to one embodiment of the present invention, the polymer binder is a polymer binder being typically used in rotomoulding and well known by the skilled person.

For example, the polymer binder is selected from the group consisting of homopolymers and/or copolymers of polyolefins, polyamides, polystyrenes, poly(meth)acrylates, polyvinylchlorides, polyurethanes, halogen-containing polymers, polyesters, polycarbonates, biodegradable polymers, and mixtures thereof.

According to one embodiment, the polymer binder is a polyolefin. Polyolefin polymers that may be used are preferably selected from the group consisting of polypropylene, polyethylene, polybutylene, and mixtures thereof.
In one embodiment, the polyolefin is a homopolymer and/or copolymer of a polyolefin. For example, the polyolefin is a homopolymer and a copolymer of a polyolefin. Alternatively, the polyolefin is a homopolymer or a copolymer of a polyolefin.

It is appreciated that the polyolefin is preferably a homopolymer of a polyolefin.

For example, the polyolefin can be polyethylene and/or polypropylene and/or polybutylene. Preferably, the polyolefin is selected from the group consisting of polypropylene, polyethylene and mixtures thereof. More preferably, the polyolefin is polyethylene.

If the polyolefin is polyethylene, the polyolefin is preferably selected from the group comprising homopolymers and/or copolymers of polyethylene like high-density polyethylene (HDPE), medium-density polyethylene (MDPE), low-density polyethylene (LDPE), very low-density polyethylene (VLDPE) and linear low-density polyethylene (LLDPE).

For example, the polyolefin is a homopolymer and/or copolymer of polyethylene.

The expression homopolymer of polyethylene used in the present invention relates to polyethylene comprising a polyethylene that consists substantially, i.e. of more than 99.7 wt.-%, still more preferably of at least 99.8 wt.-%, based on the total weight of the polyethylene, of ethylene units. For example, only ethylene units in the homopolymer of polyethylene are detectable.

In case the polyolefin is a copolymer of polyethylene, it is appreciated that the polyethylene contains units derivable from ethylene as major components. Accordingly, the copolymer of polyethylene comprises at least 55 wt.-% units derivable from ethylene, more preferably at least 60 wt.-% of units derived from ethylene, based on the total weight of the polyethylene. For example, the copolymer of polyethylene comprises 60 to 99.5 wt.-%, more preferably 90 to 99 wt.-%, units derivable from ethylene, based on the total weight of the polyethylene. The comonomers present in such copolymer of polyethylene are C₃ to C₁₀ α-olefins, preferably 1-butene, 1-hexene and 1-octene, the latter especially preferred.

Additionally or alternatively, the polyolefin is a homopolymer and/or copolymer of polypropylene.

The expression homopolymer of polypropylene as used throughout the instant invention relates to a polypropylene that consists substantially, i.e. of more than 99 wt.-%, still more preferably of at least 99.5 wt.-%, like of at least 99.8 wt.-%, based on the total weight of the polypropylene, of propylene units. In a preferred embodiment only propylene units are detectable in the homopolymer of polypropylene.

In case the polyolefin is a copolymer of polypropylene, the polypropylene preferably contains units derivable from propylene as major components. The copolymer of polypropylene preferably comprises, preferably consists of, units derived from propylene and C₂ and/or at least one C₄ to C₁₀ α-olefin. In one embodiment of the present invention, the copolymer of polypropylene comprises, preferably consists of, units derived from propylene and at least one α-olefin selected from the group consisting of ethylene, 1-butene, 1-pentene, 1-hexene and 1-octene. For example, the copolymer of polypropylene comprises, preferably consists of, units derived from propylene and ethylene. In one embodiment of the present invention, the units derivable from propylene constitutes the main part of the polypropylene, i.e. at least 60 wt.-%, preferably of at least 70 wt.-%, more preferably of at least 80 wt.-%, still more preferably of from 60 to 99 wt.-%, yet more preferably of from 70 to 99 wt.-% and most preferably of from 80 to 99 wt.-%, based on the total weight of the polypropylene. The amount of units derived from C₂ and/or at least one C₄ to C₁₀ α-olefin in the copolymer of polypropylene, is in the range of 1 to 40 wt.-%, more preferably in the range of 1 to 30 wt.-% and most preferably in the range of 1 to 20 wt.-%, based on the total weight of the copolymer of polypropylene.

If the copolymer of polypropylene comprises only units derivable from propylene and ethylene, the amount of ethylene is preferably in the range of 1 to 20 wt.-%, preferably in the range of 1 to 15 wt.-% and most preferably in the range of 1 to 10 wt.-%, based on the total weight of the copolymer of polypropylene. Accordingly, the amount of propylene is preferably in the range of 80 to 99 wt.-%, preferably in the range of 85 to 99 wt.-% and most preferably in the range of 90 to 99 wt.-%, based on the total weight of the copolymer of polypropylene.

Additionally or alternatively, the polyolefin is a homopolymer and/or copolymer of polybutylene.

The expression homopolymer of polybutylene as used throughout the instant invention relates to a polybutylene that consists substantially, i.e. of more than 99 wt.-%, still more preferably of at least 99.5 wt.-%, like of at least 99.8 wt.-%, based on the total weight of the polybutylene, of butylene units. In a preferred embodiment only butylene units are detectable in the homopolymer of polybutylene.

In case the polyolefin is a copolymer of polybutylene, the polybutylene preferably contains units derivable from butylene as major components. The copolymer of polybutylene preferably comprises, preferably consists of, units derived from butylene and C₂ and/or C₃ and/or at least one C₅ to C₁₀ α-olefin. In one embodiment of the present invention, the copolymer of polybutylene comprises, preferably consists of, units derived from butylene and at least one α-olefin selected from the group consisting of ethylene, 1-propene, 1-pentene, 1-hexene and 1-octene. For example, the copolymer of polybutylene comprises, preferably consists of, units derived from butylene and ethylene. In one embodiment of the present invention, the units derivable from butylene constitutes the main part of the polybutylene, i.e. at least 60 wt.-%, preferably of at least 70 wt.-%, more preferably of at least 80 wt.-%, still more preferably of from 60 to 99 wt.-%, yet more preferably of from 70 to 99 wt.-% and most preferably of from 80 to 99 wt.-%, based on the total weight of the polybutylene. The amount of units derived from C₂ and/or C₃ and/or at least one C₅ to C₁₀ α-olefin in the copolymer of polybutylene, is in the range of 1 to 40 wt.-%, more preferably in the range of 1 to 30 wt.-% and most preferably in the range of 1 to 20 wt.-%, based on the total weight of the copolymer of polybutylene.

According to another embodiment the polymer binder is a polystyrene (PS). Polystyrene (PS) is a synthetic aromatic polymer made from the monomer styrene and can be solid or foamed. Polystyrene is a long chain hydrocarbon wherein alternating carbon centers are attached to phenyl groups. The chemical formula of polystyrene is (C₈H₈)ₙ and contains the chemical elements carbon and hydrogen. The polystyrene can by atactic or syndiotactic. Atactic means that the phenyl groups are randomly distributed on both sides of the polymer chain. Syndiotactic means that the phenyl groups are positioned on alternating sites of the hydrocarbon backbone.

According to one embodiment the polystyrene is only atactic. According to a preferred embodiment the polystyrene is only syndiotactic. Alternatively, the polymer may be a mixture of atactic and syndiotactic polystyrene.

According to another embodiment the polymer binder is polyvinylchloride (PVC). Polyvinylchloride, or poly(vinyl chloride), commonly abbreviated PVC, is produced by polymerization of the vinyl chloride monomer and has the chemical formula (C₂H₃Cl)ₙ. PVC comes in two basic forms, namely rigid (sometimes abbreviated as RPVC) and flexible.

Polyvinylchloride is known to the skilled person and industrially available, for example from INEOS Chlor Americas Inc., Wilmington, USA as Evipol SH6030 PVC.

According to one embodiment, the polyvinylchloride comprises a polyvinylchloride homopolymer or a copolymer of vinyl chloride with a copolymerizable ethylenically unsaturated monomer. In case a homopolymer of polyvinylchloride is provided, the polyvinyl chloride contains monomers consisting of vinyl chloride alone. If a polyvinyl chloride copolymer is provided, the polyvinylchloride contains a mixture of monomers comprising a predominant amount of monomers consisting of vinyl chloride. In one preferred embodiment, the polyvinylchloride resin contains a mixture of monomers comprising an amount of monomers consisting of vinyl chloride of at least 60 wt.-%, based on the total weight of the monomer mixture. Vinyl chloride copolymers are preferably composed of vinyl chloride and from 1 to 40 wt.-% of a copolymerizable ethylenically unsaturated monomer, based on the total weight of the monomer mixture. Preferably, the copolymerizable ethylenically unsaturated monomer is selected from the group consisting of vinylidene chloride, vinyl acetate, vinyl butyrate, vinyl benzoate, vinylidene chloride, diethyl fumarate, diethyl maleate, vinyl propionate, methyl acrylate, butyl acrylate, methyl methacrylate, ethyl methacrylate, butyl methacrylate, styrene, vinyl ethers such as vinyl ethyl ether, vinyl chloroethyl ether and vinyl phenyl ether, vinyl ketones such as vinyl methyl ketone and vinyl phenyl ketone, acrylonitrile, chloroacrylonitrile and mixtures thereof. It is further preferred that the polyvinyl chloride copolymers of the present invention comprise monomers of vinyl chloride and vinyl acetate, vinyl chloride and vinyl acetate and maleic anhydride or vinyl chloride and vinylidene chloride.

In one preferred embodiment, the polyvinylchloride is a homopolymer of polyvinyl chloride.

According to another embodiment of the present invention the polymer binder is a polycarbonate (PC). Polycarbonate is a polymer that contains carbonate groups (-O-(C=O)-O-) and is also known under the trade names Lexan, Makrolon, Hammerglass and others. Polycarbonate can be obtained by the reaction of bisphenol A (BPA) with NaOH and afterwards with phosgene COCl₂. An alternative route to polycarbonates entails the transesterification from BPA and diphenyl carbonate, wherein the diphenyl carbonate can be derived in part from carbon monoxide.

According to another embodiment of the present invention, the polymer binder is a polyester. Polyesters are a class of polymers which contain the ester functional group in their main chain and are generally obtained by a polycondensation reaction.

Polyesters may include naturally occurring polymers such as cutin as well as synthetic polymers such as polycarbonate or poly butyrate. Depending on their structure polyesters may be biodegradable. The term "biodegradable" within the meaning of the present invention relates to a substance or object capable of being broken down or decomposed with the help of bacteria or other living organisms and thereby avoiding environmental pollution.

According to one embodiment, the polyester is selected form the group consisting of a polyglycolic acid, a polycaprolactone, a polyethylene adipate, a polybutylene adipate, a polyhydroxyalkanoate (PHA), a polyhydroxybutyrate, a polyalkylene terephthalate, a polyethylene terephthalate (PET), a polytrimethylene terephthalate, a polybutylene terephthalate, a polyethylene naphthalate, or a mixture thereof, or copolymers thereof. Copolymers thereof may be, for example, poly(butylene adipate-co-terephthalate) (PBAT). Any of these polymers may be in pure form, i.e. in form of a homopolymer, or may be modified by copolymerization and/or by adding one or more substituents to the main chain or side chains of the main chain.

According to another embodiment of the present invention the polymer binder is a polymer obtained from biopolymers and preferably the polymers are selected from polybutyrate adipate terephthalate (PBAT), polyhydroxyalkanolates (PHA) like polyhydroxybutyrate (PHB), polyhydroxyvalerate (PHV), polyhydroxyhexonate (PHH), polyhydroxyoctanoate (PHO) and copolymers of polyhydroxyalkanoates, polycaprolactone (PCL), polyglycolacids (PGA), polybutylene succinate (PBS), polybutylene succinate adipate (PBSA), polytrimethylene terephthalate (PTT), polybutylene terephthalate (PBT), polybutylene succinate terephthalate (PBST), cellophane (CH), celluloseethers, celluloseesters, starch acetate and/or starch blends even more preferably are selected from polybutyrate adipate terephthalate (PBAT), polyhydroxyalkanolates (PHA), polycaprolactone (PCL) and/or starch acetate and/or starch blends and most preferably are selected from the group consisting of polybutyrate adipate terephthalate (PBAT), polyhydroxybutyrate (PHB) and polycaprolactone (PCL).

According to one embodiment, the polymer binder comprises only one sort of polymer.

According to another embodiment of the present invention, the polymer binder is a halogen-containing polymer. Halogen containing polymers such as polychloroprene, polyvinylidene chloride, chlorinated polyethylene, or polytetrafluoroethylene

According to another embodiment of the present invention, the polymer binder is a polyurethane (PU), in particular linear polyurethane (TPU).

According to another embodiment of the present invention, the polymer binder is a polyamide (PA), such as PA-6, PA-6.6, PA-6.10, PA-4.6, PA-4.10, PA-6.12, PA-12.12, PA-11, PA-12 as well as partially aromatic polyamides (e.g. polyphthalamides).

According to another embodiment of the present invention, the polymer binder is a poly(meth)acrylate, for example, polymethylmethacrylate, polyacrylonitrile, polyacrylamide, polybutylacrylate.

The polymer binder may be provided in solid form or molten form. According to one embodiment, the polymer binder is a solid polymer binder, for example, in form of granules or a powder. According to another embodiment, the polymer binder is a molten polymer binder.

It is appreciated that, irrespective whether the polymer binder is provided in solid or molten form, at some point of time during the preparation of the compacted polymer-based filler material the polymer binder will be in a liquid form having a certain viscosity. According to one embodiment, the polymer binder has a rotational viscosity from 100 to 400 000 mPa·s, preferably from 1 000 to 100 000 mPa·s, and more preferably from 5 000 to 50 000 mPa·s, at 210°C. The rotational viscosity is measured by a rotational viscosimeter such as a rheometer from Anton Paar, model Physica MCR 300 Modular Compact rheometer, with a plate-plate system having a diameter of 25 mm, a gap of 0.2 mm and a shear rate of 5 s⁻¹.

It is a further requirement that the compacted polymer-based filler material comprises from 0.05 to 5 wt.-%, based on the total weight of the compacted polymer-based-mineral filler, of additive(s) including one or more stabilizer.

For example, the compacted polymer-based filler material comprises from 0.08 to 4 wt.-%, more preferably from 0.1 to 3 wt.-%, based on the total weight of the compacted polymer-based-mineral filler, of additive(s) including one or more stabilizer.

In one embodiments, the compacted polymer-based filler material comprises from 0.08 to 1 wt.-%, more preferably from 0.1 to 0.8 wt.-%, and most preferably from 0.1 to 0.5 wt.-%, e.g. from 0.1 to 0.4 wt.-%, based on the total weight of the compacted polymer-based-mineral filler, of the one or more stabilizer.

It is appreciated that the one or more stabilizer is/are advantageous for the present invention as it/they further increase the stiffness and impact properties of the final rotomoulded article.

The one or more stabilizer is/are preferably an antioxidant and/or UV stabilizer. For example, the one or more stabilizer is/are an antioxidant or UV stabilizer. Alternatively, the one or more stabilizer is/are an antioxidant and UV stabilizer.

Preferably, the compacted polymer-based filler material comprises one or more stabilizer selected from a phenolic stabilizer, a phosphite and/or phosphonite stabilizer, sulphur containing stabilizer, sterically hindered amine stabilizer, UV stabilizer such as HALS and mixtures thereof.

For example, the one or more stabilizer is a phenolic stabilizer. Suitable phenolic stabilizer are, for example: Octadecyl-3-(3,5-di-*tert*-butyl-4-hydroxyphenyl)propanonate, pentaerythritol-tetrakis[3-(3,5-di-*tert*-butyl-4-hydroxyphenyl)propanoate, tris(3,5-di-*tert*-butyl-4-hydroxyphenyl)isocyanurate, 1,3,5-trimethyl-2,4,6-tris(3,5-di-*tert*-butyl-4-hydroxybenzyl)benzene, triethyleneglycol-bis[3-(3-*tert*-butyl-4-hydroxy-5-methylphenyl)propanoate, N,N'-hexane-1,6-diyl-bis[3-(3,5-di-*tert*-butyl-4-hydroxyphenyl)propanamide. Phenolic stabilizer are well known to the skilled person and are commercially available, for example, as irganox® 1010 or irgastab® 302 or RM68 from BASF.

Additionally or alternatively, the one or more stabilizer is a phosphite and/or phosphonite stabilizer. Suitable phosphite/phosphonite stabilizer are, for example: Tris-(2,4-di-*tert*-butylphenyl)phosphite, 3,9-bis(2,4-di-*tert*-butylphenoxy)-2,4,8,10-tetraoxa-3,9-diphosphaspiro[5.5]undecene, tetrakis(2,4-di-*tert-*butylphenyl)[1,1-biphenyl]-4,4'-diylbisphosphonite. Phosphite and/or phosphonite stabilizer are well known to the skilled person and are commercially available, for example, as irgafos® 168 from BASF.

Additionally or alternatively, the one or more stabilizer is a sulphur containing stabilizer. Sulphur containing stabilizer are well known to the skilled person and are commercially available, for example, as irganox® 802 from BASF.

Additionally or alternatively, the one or more stabilizer is a sterically hindered amine stabilizer. Suitable sterically hindered amine stabilizer are, for example: 1,1-Bis(2,2,6,6-tetramethyl-4-piperidyl)sebacate, bis(2,2,6,6-tetramethyl-4-piperidyl)-succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl)-*n*-butyl-3,5-di-*tert*-butyl-4-hydroxybenzylmalonate, the condensation product of 1-(2-hydroxyethyl)-2,2,6,6-tetramethyl-4-hydroxypiperidin and succinic acid, linear or cyclic condensation products of N,N'-bis(2,2,6,6-tetramethyl-4-piperidyl )hexamethylenediamine and 4-*tert*-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butanetetracarboxylate, 1,1'-(1,2-ethanediyl)-bis(3,3,5,5-tetramethylpiperazinon), 4-benzoyl-2,2,6,6-tetramethylpiperidine, 4-stearyloxy-2,2,6,6-tetramethylpiperidine, linear or cyclic condensation products of N,N'-bis(2,2,6,6-tetramethyl-4-piperidyl)hexamethylenediamine and 4-morpholino-2,6-dichloro-1,3,5-triazine, the reaction product of 7,7,9,9-tetramethyl-2-cycloundecyl-1-oxa-3,8-diaza-4-oxospiro[4.5]decene and epichlorohydrine. Sterically hindered amine stabilizer are well known to the skilled person and are commercially available, for example, as chimassorb® 2020, chimassorb® 944 or uvinul® 5050 from BASF.

Preferably, the additive(s) include a mixture of stabilizers. For example, the mixture of stabilizers contains phenolic stabilizer and a phosphite and/or phosphonite stabilizer. Such mixtures are well known to the skilled person and are commercially available, for example, as irganox® B215 or irganox® B225 from BASF.

In one embodiment, the additive(s) including one or more stabilizers are free of further additives. That is to say, the additive(s) consists of the one or more stabilizer.

In one embodiment, the additive(s) include one or more further additives which are well known to the skilled person. Such additives comprise, without being limited to, nucleating agents, metal deactivators, impact modifiers, plasticizers, lubricants, rheology modifiers, processing aids, pigments, dyes, optical brighteners, antimicrobials, antistatic agents, slip agents, anti-block agents, coupling agents, dispersants, compatibilizers, oxygen scavengers, acid scavengers, markers, antifogging agents, surface modifiers, flame retardants, blowing (or foaming) agents, smoke suppressors, reinforcement agents, such as glass fibres, carbon fibres and/or glass bubbles, or mixtures of the foregoing additives.

### The process for producing a compacted material

According to the present invention, a process for producing the compacted polymer-based filler material is provided, comprising the following steps:
a) providing a surface-treated filler material product in an amount from 40 to 98 wt.-%, based on the total weight of the compacted polymer-based-mineral filler, the surface-treated filler material product comprising an alkaline earth metal carbonate-comprising filler material and a treatment layer on at least a part of the surface of the alkaline earth metal carbonate-comprising filler material,
   wherein the treatment layer comprises
   i) at least one mono-substituted succinic anhydride and/or at least one mono-substituted succinic acid and/or reaction products thereof, and/or
   ii) a phosphoric acid ester blend of one or more phosphoric acid mono-ester and reaction products thereof and/or one or more phosphoric acid di-ester and reaction products thereof, and/or
   iii) an aliphatic carboxylic acid having a total amount of carbon atoms from C₄ to C₂₄ and/or reaction products thereof, and/or
   iv) a polyhydrogensiloxane and/or reaction products thereof, and/or
   v) an aliphatic aldehyde and/or reaction products thereof,
b) providing a polymer binder in an amount from 1.95 to 59.95 wt.-%, based on the total weight of the compacted polymer-based-mineral filler,
c) providing additive(s) including one or more stabilizer in an amount from 0.05 to 5 wt.-%, based on the total weight of the compacted polymer-based-mineral filler,
d) simultaneously or subsequently feeding the surface-treated filler material product of step a), the polymer binder of step b) and the additives including one or more stabilizer of step c) into a high speed mixer unit,
e) mixing the surface-treated filler material product of step a), the polymer binder of step b) and the additives including one or more stabilizer of step c) in the high speed mixer unit until formation of a compacted material, and
f) reducing the temperature of the compacted material obtained from step e) below the melting point or glass transition temperature of the polymer binder.

The process of the present invention may be carried out in form of a continuous process or a batch process.

According to one embodiment, the surface-treated filler material product provided in step a) has a temperature between 20°C and 300°C, and preferably between 60°C and 250°C.

According to one embodiment, the polymer binder provided in step b) is in solid form. According to another embodiment, the polymer binder provided in step b) is in molten form, preferably having a temperature above the melting point or glass transition temperature of the polymer binder. According to one embodiment, the polymer binder has a temperature which is from 50°C to 300°C above the glass transition temperature of the polymer binder, if an amorphous polymer binder is used. According to another embodiment, the polymer binder has a temperature which is from 10°C to 200°C above the melting point of the polymer binder, if the polymer binder is an at least partially crystalline polymer. For example, the polymer binder may have a temperature between 20°C and 300°C, preferably between 30°C and 270°C, more preferably between 40°C and 250°C, and most preferably between 50°C und 230°C.

According to one embodiment, the additive(s) including one or more stabilizer provided in step c) is/are in liquid or dry form, preferably dry from.

According to the present invention, the at least one powder material of step a), the polymer binder of step b) and the additive(s) including one or more stabilizer of step c) are fed into a high speed mixer unit. Suitable conveyor systems for feeding the components into the high speed mixer unit are known to the skilled person. For example, the feeding may be carried out by use of a pneumatic conveyor system, a vibrating conveyor system, a flexible conveyor system, a vertical conveyor system, a spiral conveyor system, or combinations of one or more of the foregoing systems.

Suitable high speed mixer units are also known to the skilled person. Examples of suitable high speed mixer units are single-screw high speed mixer, such as ring layer mixers available from the companies Lödige, Amixon, AVA-Huep or Zeppelin, or high speed batch mixers as available from the companies Henschel, Papenmeier, Mixaco, or Zepplin, or intensive mixer such as available by the companies Laeis or Eirich.

According to one embodiment, process step d) comprises simultaneously or subsequently feeding the at least one powder material of step a), the polymer binder of step b) and the additive(s) including one or more stabilizer of step c) into a high speed mixer unit of a cylindrical treatment chamber. According to a preferred embodiment, the cylindrical treatment chamber contains one single-screw high speed mixer, in a horizontal or vertical position.

Especially useful in the present invention are conventional commercially available cylindrical treatment chambers containing a single-screw high speed mixer, having e.g. the following parameters: length 350 mm, diameter 90 mm, at 1 000 - 4 000 rpm; length 1 200 mm, diameter 230 mm, at 400 - 3 000 rpm; length 150 mm, diameter 150 mm, at 600 - 1 300 rpm. Preferably, the ratio length : diameter is from 1:1 to 6:1, more preferably from 2:1 to 5:1, especially 3:1 to 4:1.

In step e) of the inventive process, the at least one powder material of step a), the polymer binder of step b) and the additive(s) including one or more stabilizer of step c) are mixed in the high speed mixer unit until formation of a compacted material.

The mixing may be carried out at a temperature from 100°C to 200°C, preferably from 120°C to 180°C, and more preferably at a temperature from 130°C to 160°C. The preferred circumferential mixing speed may be from 5 to 100 m/s, preferably from 7 to 80 m/s, more preferably from 10 to 50 m/s.

According to one embodiment, the polymer binder provided in step b) is a molten polymer binder, and in step e) the at least one powder material of step a), the additive(s) including one or more stabilizer of step c) and the molten polymer binder of step b) are mixed in the high speed mixer unit until formation of a compacted material.

According to another embodiment, the polymer binder provided in step b) is a solid polymer binder, and in step e) the at least one powder material of step a), the additive(s) including one or more stabilizer of step c) and the solid polymer binder of step b) are mixed in the high speed mixer unit until formation of a compacted material, wherein the mixing step is carried out at a temperature above the melting point or glass transition temperature of the polymer binder.

According to one embodiment, the mixing step e) is performed at a temperature which is from 50°C to 300°C above the glass transition temperature of the polymer binder, if an amorphous polymer binder is used. According to another embodiment, the mixing step e) is performed at a temperature which is from 10°C to 200°C above the melting point of the polymer binder, if the polymer binder is an at least partially crystalline polymer. For example, the mixing step e) may be carried out at a temperature from 100°C to 200°C, preferably from 120°C to 180°C, and most preferably from 130°C to 160°C.

According to the present invention, mixing step e) is carried out until formation of a compacted material. By compacted material, a bulk material is understood to consist of a conglomerate of a number of single particles forming a material with a weight median particle size *d*₅₀ ranging from 10 µm to 10 mm, measured by sieve analysis using the Retsch AS 200 sieve tower according to ISO 3310 standard.

In process step f) the temperature of the compacted material obtained from step e) is reduced below the melting point or glass transition temperature of the polymer binder. According to one embodiment, in process step f) the temperature of the compacted material obtained from step e) is reduced below the melting point of the polymer binder. According to another embodiment, in process step f) the temperature of the compacted material obtained from step e) is reduced below the glass transition temperature of the polymer binder.

The temperature of the compacted material obtained from step e) may be reduced by any method and means known to the skilled person. According to one embodiment, process step f) is carried out by transferring the compacted material obtained from step e) to a cooling unit. Examples for suitable cooling units are fluidized beds, or means which allow to cool down the compacted material via chilled surfaces.

According to an optional embodiment, a surface treatment agent is fed simultaneously with or after the feeding of the at least one powder material into the high speed mixer unit. The surface treatment agent may be liquid or liquefied, and may be preferably provided in the molten state.

The main difference between the surface treatment agent and the polymer binder is that the surface treatment agent is chemically bound to the at least one powder material. Preferably, the surface treatment agent serves, inter alia, to alter the surface tension of the powder material, and thus, the hydrophobicity thereof. On the other hand, as mentioned below, also waxes can be used as surface treatment agent, which are not chemically bound, but particularly serve to improve dispersion and especially reduce the viscosity of high viscosity polymer binders.

According to one embodiment, the surface treatment agent is selected from the group comprising stearic acid, zinc oxide, synthetic paraffin wax, polyethylene metallocene wax, and polypropylene wax. According to one embodiment the temperature of the surface treatment agent is between 20°C and 300°C, preferably between 60°C and 250°C, and more preferably between 60°C and 120°C. However, the maximum temperature has to be below the decomposition temperature of any one of the ingredients.

It may furthermore be advantageous that before step e), i.e. before the temperature of the compacted material obtained from step d) is reduced below the melting temperature or glass transition temperature of the polymer binder, the compacted material of step d) is transferred to a second mixing unit. In this second mixing unit optionally further molten polymer binder can be added to and mixed with the compacted material of step d).

It has to be noted that conventional functional components like impact modifiers, stabilizers, etc. may be included during the mixing process, or to the finished compacted material, as well in the final product, i.e. the compounded thermoplastic resin.

### Products and uses

According to another aspect, a rotomoulded product is provided. The rotomoulded product is obtained from the compacted polymer-based filler material as defined herein.

The rotomoulded product may by a one- or multi-layer rotomoulded product. It is appreciated that the one- or multi-layer rotomoulded product may also comprise a foamed layer. For example, the at least one layer obtained from the compacted polymer-based filler material is a foamed layer.

In one embodiment, the rotomoulded product is a one-layer rotomoulded product. In this embodiment, the single layer is obtained from the compacted polymer-based filler material. For example, the single layer obtained from the compacted polymer-based filler material is a foamed layer.

Alternatively, the rotomoulded product is a multi-layer rotomoulded product, such as a two- or three-layer rotomoulded product. In this embodiment, at least one layer is obtained from the compacted polymer-based filler material. For example, all layers are obtained from the compacted polymer-based filler material. In one embodiment, at least one layer obtained from the compacted polymer-based filler material is a foamed layer.

In one embodiment, the rotomoulded product is a multi-layer rotomoulded product, such as a two- or three-layer rotomoulded product, wherein one layer is obtained from the compacted polymer-based filler material. In case of a two-layer rotomoulded product, the layer obtained from the compacted polymer-based filler material may the inner or outer layer, preferably the inner layer. For example, the inner layer obtained from the compacted polymer-based filler material is a foamed layer. The other layer may be obtained from a polymer being free of the compacted polymer-based filler material. However, the other layer may comprise e.g. colorants.

In case of a three-layer rotomoulded product, the rotomoulded product may have a A-B-A, B-A-A or A-A-B structure, wherein the B layer refers to the layer obtained from the compacted polymer-based filler material. For example, the B layer is a foamed layer. The other layers (A) may be obtained from a polymer being free of the compacted polymer-based filler material but may comprise e.g. colorants.

The rotomoulded product preferably has
i) a tensile modulus measured according to ISO 527-2/1B/50 at a speed of 50 mm/min in the range from 560 to 750 MPa, and/or
ii) a tensile yield stress measured according to ISO 527 in the range from 560 to 750 N/mm², and/or
iii) a Charpy Impact Strength (NIS+23) measured according to ISO 179-1/1e/UN at +23°C in the range from 10 to 130 kJ/m², and/or
iv) a Charpy Impact Strength (NIS-40) measured according to ISO 179-1/le/UN at -40°C in the range from 5 to 80 kJ/m².

For example, the rotomoulded product has
i) a tensile modulus measured according to ISO 527-2/1B/50 at a speed of 50 mm/min in the range from 560 to 750 MPa, or
ii) a tensile yield stress measured according to ISO 527 in the range from 560 to 750 N/mm², or
iii) a Charpy Impact Strength (NIS+23) measured according to ISO 179-1/1e/UN at +23°C in the range from 10 to 130 kJ/m², or
iv) a Charpy Impact Strength (NIS-40) measured according to ISO 179-1/1e/UN at -40°C in the range from 5 to 80 kJ/m².

Alternatively, the rotomoulded product has
i) a tensile modulus measured according to ISO 527-2/1B/50 at a speed of 50 mm/min in the range from 560 to 750 MPa, and
ii) a tensile yield stress measured according to ISO 527 in the range from 560 to 750 N/mm², and
iii) a Charpy Impact Strength (NIS+23) measured according to ISO 179-1/1e/UN at +23°C in the range from 10 to 130 kJ/m², and
iv) a Charpy Impact Strength (NIS-40) measured according to ISO 179-1/1e/UN at -40°C in the range from 5 to 80 kJ/m².

The rotomoulded product is obtained by a process for producing a rotomoulded product. Such processes are well known in the art and the skilled person will adapt the process conditions to the specific equipment available.

The process for producing a rotomoulded product comprises the steps of
a) mixing a compacted polymer-based filler material as defined herein with at least one polymer binder, wherein the polymer binder may be the same or different to the polymer binder in the compacted polymer-based filler material, and
b) subjecting the mixture obtained in step a) to one or more rotomoulding process(es), and
c) optionally subjecting at least one polymer binder before or after step b), preferably before step b), to one or more rotomoulding process(es), wherein the polymer binder may be the same or different to the polymer binder in the compacted polymer-based filler material.

With regard to the compacted polymer-based filler material, the polymer binder and preferred embodiments thereof, it is referred to the detailed comments provided when discussing the compacted polymer-based filler material in detail above.

According to one embodiment, process step b) is carried out at elevated temperatures. For example process step b) is carried out at a temperature between 30°C and 200°C, preferably between 40°C and 150°C, and more preferably between 50°C and 120°C. Carrying out process step b) at such elevated temperature is advantageous in order to prepare one or more foamed layers. However, the maximum temperature has to be below the decomposition temperature of any one of the ingredients.

Such processes are well known in the art and the skilled person will adapt the process conditions to the specific equipment available.

In view of the advantageous effects achieved, the present invention refers in another aspect to the use of the compacted polymer-based filler material as additive in a rotomoulded product.

### Examples

### 1 Measurement methods and materials

In the following, measurement methods and materials implemented in the examples are described.

### Particle size of mineral particles

The weight median particle size *d*₅₀ as used herein, as well as the top cut *d*₉₈ is determined based on measurements made by using a Sedigraph™ 5120 instrument of Micromeritics Instrument Corporation. The method and the instruments are known to the skilled person and are commonly used to determine grain size of fillers and pigments. The measurement was carried out in an aqueous solution comprising 0.1 wt.-% Na₄P₂O₇. The samples were dispersed using a high speed stirrer and supersonics. For the measurement of dispersed samples, no further dispersing agents were added.

### Specific Surface Area (BET)

The specific surface area was measured using nitrogen and the BET method according to ISO 9277.

### Rotational viscosimetry

The rotational viscosity was measured by a rheometer from Anton Paar, Austria, model Physica MCR 300 Modular Compact rheometer, with a plate-plate system having a diameter of 25 mm, a gap of 0.2 mm and a shear rate of 5 s⁻¹.

### Charpy unnotched impact strength

The charpy unnotched impact strength was determined according to ISO 179 / 1eU at +23°C (NIS+23) and -40°C (NIS-40) by using a minimum of 5 test specimens of type 1 for each temperature and a hammer mass of 7.5 J. The test specimens were prepared by thickness being thickness of wall.

### Tensile properties

Tensile Modulus, yield stress, yield strain, break strain and break stress were measured according to ISO 527-2 (speed = 50 mm/min; +23°C and -40°C) by using a minimum of 5 test specimens of type 1B. The test specimens were prepared by thickness being thickness of wall. If not otherwise indicated the properties were determined at +23°C.

### MFR

The melt flow rate MFR is measured according to ISO 1133 (190°C, 2.16 kg load).

### Density

The density was measured according to ASTM D792.

### Melting temperature

The melting temperature (Tm) was measured with a differential scanning calorimetry (DSC).

### Ash content

The ash content in wt.-% of a compacted material sample, based on the total weight of the sample, was determined by incineration of a sample in an incineration crucible which was put into an incineration furnace at 400°C for 40 minutes. The ash content was measured as the total amount of remaining inorganic residues.

### 2 Examples

### A. Preparation of the compacted material

### - Materials

### Powder material

CC1: Very fine calcium carbonate powder manufactured from a high purity, white marble, and surface-treated with stearic acid (commercially available from Sigma-Aldrich, Croda, USA). The CC1 has the following characteristics:

| | |
|---|---|
| • Residue on a 45 µm sieve (ISO 787/7) | 0.05 % |
| • Top cut (*d*₉₈) | 15 µm |
| • Mean particle size (*d*₅₀) | 2.6 µm |
| • Particles < 2 µm | 38 % |
| Whiteness: | |
| • Brightness (Ry, C/2°, DIN 53163) | 95 % |
| • Tappi brightness (R457, ISO 2469) | 94.5 % |
| Moisture ex works (ISO 787/2) | 0.2 % |

### Polymer binder and stabilizer

Binder A: Ethylene- 1 -octene-copolymer (Affinity GA 1900), density (ASTM D792) = 0.87 g/cm³, according to the technical data sheet, rotational viscosity = 8 500 mPa-s at 190°C, commercially available from The Dow Chemical Company, USA.

Binder B: Metallocene based polypropylene wax (Licocene PP-1302), density (23°C; ISO 1183) = 0.87 g/cm³, according to the technical data sheet, rotational viscosity = 130 mPa-s at 190°C, commercially available from Clariant International Ltd., Switzerland.

Stabilizer: ALBlend 181 antioxidant is a (1:1) blend of ETHANOX® 310 antioxidant, a primary phenolic antioxidant, and ETHAPHOS® 368 antioxidant, a secondary organophosphite. ALBlend 181 is commercially available from SI Group Inc., USA.

### - Preparation

A horizontal "Ring-Layer-Mixer/Pelletizer", namely "AVA Mixer HRM70" with process length of 1100 mm, and diameter of 300mm was used. The cylinder was fitted with a heating/cooling double wall. Mixing and compacting was obtained by a rotating, cylindrical, pin-fitted screw.

The powder material CC1 was fed gravimetrically into the feed port at a rate of 500 kg/h. The polymer binder or polymer binder blend was injected in liquid state at a temperature of 230°C through liquid feeding port at a rate of 65 kg/h. The employed amounts of powder material CC1 and the type and amounts of the polymer binders and stabilizers are indicated in Table 1 below.

Mixing and compacting of the powder material and the polymer binder or polymer binder blend was carried out in the "Ring-Layer-Mixer/Pelletizer" at 140-160°C and a screw speed of 2000-2200 rpm.

The mixture left the mixer/pelletizer through the outlet port, was transferred by gravity into a second Ring-Layer-Mixer/Pelletizer for compacting and cooling, operated at a temperature of 120-140°C and a screw speed of 2000-2200 rpm. In this example, both units were of identical size and dimensions. The resulting compacted material left the unit through the outlet port and was cooled to room temperature with ambient air in a fluid bed.

**Table 1: Compositions and properties of prepared compacted materials CM1 and CM2 (wt.-% is based on total weight of the compacted material).**

| | CM1 | CM2 |
|---|---|---|
| CC1 | 88.5 wt.-% | 88 wt.-% |
| Binder A | 11.3 wt.-% | 9.6 wt.-% |
| Binder B | -- | 2.4 wt.-% |
| Stabilizer | 0.2 wt.-% | -- |
| Ash content [wt. -%] | 87.8 wt.-% | 87.3 wt.-% |
| PSD | 85-90 % <160 micron | 85-90 % <160 micron |

### B. Rotomoulding tests

### - Equipment

A cube test mould with dimensions of 300mm x 330mm x 330mm together with a ferry Rotospeed rotational moulding machine (LPG burner) was used. The rotation ratio of the drop-arm, which rotates the mould (and has 2 axis), was 8 rpm (major axis) : 2 rpm (minor axis). A total shot weight of 2.4 kg was used. Rotopaq temperature monitoring used to measure air temperature inside mould as well as air temperature of oven (just outside mould). Oven set temperature: 300°C

Mould release was applied to inside surface of mould prior to moulding and allowed to dry for 10 minutes: Freekote700-NC (liquid). Internal air temperature of part when de-moulded: less than 70°C. Cooling was carried out by using forced air convection of ambient air.

### - Materials

Polyethylene resin (Dowlex 2631.10 UE), MFR = 7 g/10 min (190°C, 2.16 kg, ISO 1133), density (ASTM D-792) = 0.935 g/cm³, a melting point Tm (DSC) = 124°C according to the technical data sheet available from The Dow Chemical Company, USA.

### - Test 1

In a first step, 2.4 kg of polyethylene resin were tumble mixed in a plastic bag by hand for 30 seconds. The mixture obtained was then placed inside the mould. The material tumbled on the inside surface of the mould (until it became hot enough to stick to the mould surface).

The mould was heated to melt the polymer and then cooled to an internal air temperature of 70°C before demoulding took place. The time in the oven was about 12 minutes.

Further settings were as follows:
Cycle time: 47.48 min
IAT (internal air temperature) at removal from oven: 186°C
PIAT (peak internal air temperature): 208.9°C

The results are set out in table 2.

### - Test 2

In a first step, 2.28 kg of polyethylene material and 0.12 kg of CM1 were tumble mixed in a bag by hand for 30 seconds. The mixture was then placed inside the mould. The material tumbled on the inside surface of the mould (until it became hot enough to stick to the mould surface).

The mould was heated to melt the polymer and then cooled to an internal air temperature of 70°C before demoulding took place. The time in the oven was about 11.5 minutes.

Further settings were as follows:
Cycle time: 44.27 min
IAT (internal air temperature) at removal from oven: 186°C
PIAT (peak internal air temperature): 207°C

The results are set out in table 3.

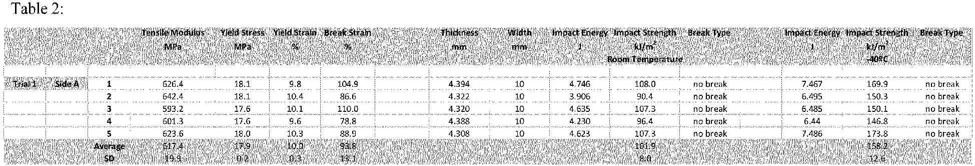

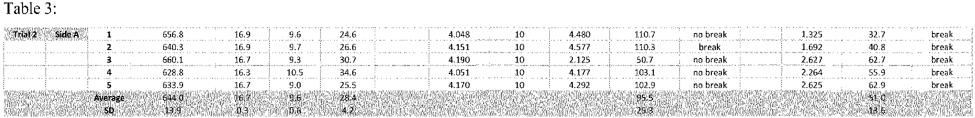

## Claims

1. Compacted polymer-based filler material having a top cut particle size *d*₉₈ of ≤ 500 µm, the material comprising
a) from 40 to 98 wt.-%, based on the total weight of the compacted polymer-based-mineral filler, of a surface-treated filler material product comprising an alkaline earth metal carbonate-comprising filler material and a treatment layer on at least a part of the surface of the alkaline earth metal carbonate-comprising filler material,
wherein the treatment layer comprises
i) at least one mono-substituted succinic anhydride and/or at least one mono-substituted succinic acid and/or reaction products thereof, and/or
ii) a phosphoric acid ester blend of one or more phosphoric acid mono-ester and reaction products thereof and/or one or more phosphoric acid di-ester and reaction products thereof, and/or
iii) an aliphatic carboxylic acid having a total amount of carbon atoms from C₄ to C₂₄ and/or reaction products thereof, and/or
iv) a polyhydrogensiloxane or an inert silicone oil and/or reaction products thereof, and/or
v) an aliphatic aldehyde and/or reaction products thereof,
b) from 1.95 to 59.95 wt.-%, based on the total weight of the compacted polymer-based-mineral filler, of a polymer binder, and
c) from 0.05 to 5 wt.-%, based on the total weight of the compacted polymer-based-mineral filler, of additive(s) including one or more stabilizers.

2. The compacted polymer-based filler material according to claim 1, wherein the alkaline earth metal carbonate-comprising filler material is a calcium carbonate-comprising filler material, preferably is a natural ground calcium carbonate, precipitated calcium carbonate, surface-modified calcium carbonate, or a mixture thereof, and most preferably is a natural ground calcium carbonate.

3. The compacted polymer-based filler material according to claim 1 or 2, wherein the alkaline earth metal carbonate-comprising filler material has a weight median particle size *d*₅₀ from 0.05 to 30 µm, preferably from 0.5 to 10 µm, and most preferably from 0.5 to 8 µm.

4. The compacted polymer-based filler material according to any one of the preceding claims, wherein the at least one mono-substituted succinic anhydride consists of succinic anhydride mono-substituted with a group selected from a linear, branched, aliphatic and cyclic group having a total amount of carbon atoms from C2 to C30, preferably from C3 to C25, and most preferably from C4 to C20 in the substituent.

5. The compacted polymer-based filler material according to any one of the preceding claims, wherein
I) the one or more phosphoric acid mono-ester consists of an o-phosphoric acid molecule mono-esterified with one alcohol molecule selected from unsaturated or saturated, branched or linear, aliphatic or aromatic alcohols having a total amount of carbon atoms from C6 to C30, preferably from C8 to C22, more preferably from C8 to C20, and most preferably from C8 to C18 in the alcohol substituent, and/or
II) the one or more phosphoric acid di-ester consists of an o-phosphoric acid molecule di-esterified with two alcohol molecules selected from the same or different, unsaturated or saturated, branched or linear, aliphatic or aromatic fatty alcohols having a total amount of carbon atoms from C6 to C30, preferably from C8 to C22, more preferably from C8 to C20, and most preferably from C8 to C18 in the alcohol substituent.

6. The compacted polymer-based filler material according to any one of the preceding claims, wherein the surface-treated filler material product comprises the treatment layer in an amount of at least 0.1 wt.-%, based on the total dry weight of the alkaline earth metal carbonate-comprising filler material, preferably in an amount from 0.1 to 3 wt.-%.

7. The compacted polymer-based filler material according to any one of the preceding claims, wherein the polymer binder
a) has a rotational viscosity from 100 to 400 000 mPa·s, preferably from 1 000 to 100 000 mPa·s, and more preferably from 5 000 to 50 000 mPa·s, at 210°C, and/or
b) is selected from the group consisting of homopolymers and/or copolymers of polyolefins, polyamides, polystyrenes, poly(meth)acrylates, polyvinylchlorides, polyurethanes, halogen-containing polymers, polyesters, polycarbonates, biodegradable polymers, and mixtures thereof.

8. The compacted polymer-based filler material according to any one of the preceding claims, wherein the one or more stabilizer is/are a phenolic stabilizer, a phosphite and/or phosphonite stabilizer, sulphur containing stabilizer, sterically hindered amine stabilizers, HALS, UV stabilizer and mixtures thereof.

9. The compacted polymer-based filler material according to any one of the preceding claims, wherein the compacted polymer-based filler material has a top cut particle size *d*₅₀ of ≤ 150 µm, more preferably of ≤ 100 µm and most preferably of ≤ 80 µm.

10. A process for producing a compacted polymer-based filler material as defined in any one of claims 1 to 9, the process comprising the steps of:
a) providing a surface-treated filler material product in an amount from 40 to 98 wt.-%, based on the total weight of the compacted polymer-based-mineral filler, the surface-treated filler material product comprising an alkaline earth metal carbonate-comprising filler material and a treatment layer on at least a part of the surface of the alkaline earth metal carbonate-comprising filler material,
wherein the treatment layer comprises
i) at least one mono-substituted succinic anhydride and/or at least one mono-substituted succinic acid and/or reaction products thereof, and/or
ii) a phosphoric acid ester blend of one or more phosphoric acid mono-ester and reaction products thereof and/or one or more phosphoric acid di-ester and reaction products thereof, and/or
iii) an aliphatic carboxylic acid having a total amount of carbon atoms from C₄ to C₂₄ and/or reaction products thereof, and/or
iv) a polyhydrogensiloxane or an inert silicone oil and/or reaction products thereof, and/or
v) an aliphatic aldehyde and/or reaction products thereof,
b) providing a polymer binder in an amount from 1.95 to 59.95 wt.-%, based on the total weight of the compacted polymer-based-mineral filler,
c) providing additive(s) including one or more stabilizer in an amount from 0.05 to 5 wt.-%, based on the total weight of the compacted polymer-based-mineral filler,
d) simultaneously or subsequently feeding the surface-treated filler material product of step a), the polymer binder of step b) and the additives including one or more stabilizer of step c) into a high speed mixer unit,
e) mixing the surface-treated filler material product of step a), the polymer binder of step b) and the additives including one or more stabilizer of step c) in the high speed mixer unit until formation of a compacted material, and
f) reducing the temperature of the compacted material obtained from step e) below the melting point or glass transition temperature of the polymer binder.

11. Rotomoulded product obtained from the compacted polymer-based filler material as defined in any one of claims 1 to 9.

12. Rotomoulded product according to claim 11 having
i) a tensile modulus measured according to ISO 527-2/1B/50 at a speed of 50 mm/min in the range from 560 to 750 MPa, and/or
ii) a tensile yield stress measured according to ISO 527 in the range from 560 to 750 N/mm², and/or
iii) a Charpy Impact Strength (NIS+23) measured according to ISO 179-1/1e/UN at +23°C in the range from 10 to 130 kJ/m², and/or
iv) a Charpy Impact Strength (NIS-40) measured according to ISO 179-1/1e/UN at -40°C in the range from 5 to 80 kJ/m².

13. Rotomoulded product according to claim 11 or 12, wherein the product is a one- or multi-layer, such as a two- or three-layer, rotomoulded product, and at least one layer is obtained from the compacted polymer-based filler material.

14. A process for producing a rotomoulded product, the process comprising the steps of
a) mixing a compacted polymer-based filler material as defined in any one of claims 1 to 9 with at least one polymer binder, wherein the polymer binder may be the same or different to the polymer binder in the compacted polymer-based filler material, and
b) subjecting the mixture obtained in step a) to one or more rotomoulding process(es), and
c) optionally subjecting at least one polymer binder before or after step b), preferably before step b), to one or more rotomoulding process(es), wherein the polymer binder may be the same or different to the polymer binder in the compacted polymer-based filler material.

15. Use of a compacted polymer-based filler material as defined in any one of claims 1 to 9 as additive in a rotomoulded product.
